# EUROPEAN PATENT APPLICATION

(11) **EP 4 676 104 A1**
(43) Date of publication of application: **07.01.2026**
(21) Application number: 24785034.0
(22) Date of filing: 23.02.2024
(51) Int. Cl.: H04W 4/90, H04W 4/12, H04W 4/16, H04W 48/16, H04W 48/18, H04W 76/18, H04W 76/19, H04W 76/50, H04W 84/06, H04W 84/12

(54) **ELECTRONIC DEVICE AND METHOD FOR CONNECTING OUTGOING CALL BY USING MULTIPLE COMMUNICATION CIRCUITS**

(30) Priority: 05.04.2023 KR 20230045050; 14.06.2023 KR 20230076456
(71) Applicant: Samsung Electronics Co., Ltd., Suwon-si, Gyeonggi-do 16677 (KR)
(72) Inventor: LEE, Hyunsoo, Suwon-si Gyeonggi-do 16677 (KR); KIM, Dongwoo, Suwon-si Gyeonggi-do 16677 (KR); KWON, Yanghee, Suwon-si Gyeonggi-do 16677 (KR); HAN, Yonggil, Suwon-si Gyeonggi-do 16677 (KR); HAN, Jaegi, Suwon-si Gyeonggi-do 16677 (KR)
(74) Representative: Gulde & Partner
(86) International application number: PCT/KR2024/002409
(87) International publication number: WO 2024/210324

(57) **Abstract**

A processor of an electronic device according to an embodiment may be configured to, in response to an input for an outgoing call related to an emergency service, while identifying whether a communication link is established on the basis of a WLAN by using a first communication circuit among multiple communication circuits, display a first user interface related to the outgoing call on a display. The processor may be configured to, in a first state where the communication link is established on the basis of the WLAN, request a first outgoing connection for the outgoing call via the first user interface during a first designated time by using a second communication circuit related to a cellular network. The processor may be configured to, after the first designated time, on the basis of identifying failure of the first outgoing connection, request a second outgoing connection for the outgoing call during a second designated time by using the first communication circuit.

## Description

### [Technical Field]

Various embodiments of the present disclosure relate to an electronic device and a method for connecting an outgoing call using a plurality of communication circuitry.

### [Background Art]

Recently, spread of various types of electronic devices such as a smartphone, a tablet personal computer (PC), a wireless earphone, and a smart watch are increasing. These electronic devices may include communication circuitry connectable to a satellite. The electronic device may provide an emergency rescue service using a connection with a satellite.

### [Disclosure]

### [Technical Solution]

According to an embodiment, in an electronic device, the electronic device may include a display, a plurality of communication circuitry, and a processor. The processor may be configured to, while identifying whether a communication link is established based on a wireless local area network (WLAN) using first communication circuitry of the plurality of communication circuitry in response to an input for an outgoing call related to an emergency service, display, on the display, a first user interface related to the outgoing call. The processor may be configured to, in a first state where the communication link is established based on the WLAN, using the first user interface, during a first specified time, request a first outgoing connect for the outgoing call using second communication circuitry related to a cellular network. The processor may be configured to, after the first specified time, based on identifying a failure of the first outgoing connection, request a second outgoing connection for the outgoing call using the first communication circuitry during a second specified time. The processor may be configured to, after the second specified time, based on identifying a failure of the second outgoing connection, change the first user interface displayed on the display to a second user interface for transmitting a message to a satellite using third communication circuitry related to the satellite. The processor may be configured to, in a second state distinct from the first state, in response to the input, request the first outgoing connection for the outgoing call using the second communication circuitry during a third specified time. The processor may be configured to, after the third specified time, based on identifying a failure of the first outgoing connection, display the second user interface by bypassing a request for the second outgoing connection.

According to an embodiment, in a method performed by an electronic device, the method may include, while identifying whether a communication link is established based on a WLAN using first communication circuitry of a plurality of communication circuitry in response to an input for an outgoing call related to an emergency service, displaying, on a display, a first user interface related to the outgoing call. The method may include, in a first state where the communication link is established based on the WLAN, using the first user interface, during a first specified time, requesting a first outgoing connect for the outgoing call using second communication circuitry related to a cellular network. The method may include, after the first specified time, based on identifying a failure of the first outgoing connection, requesting a second outgoing connection for the outgoing call using the first communication circuitry during a second specified time. The method may include, after the second specified time, based on identifying a failure of the second outgoing connection, changing the first user interface displayed on the display to a second user interface for transmitting a message to a satellite using third communication circuitry related to the satellite. The method may include, in a second state distinct from the first state, in response to the input, requesting the first outgoing connection for the outgoing call using the second communication circuitry during a third specified time. The method may include, after the third specified time, based on identifying a failure of the first outgoing connection, displaying the second user interface by bypassing a request for the second outgoing connection.

According to an embodiment, in a computer readable storage medium including one or more programs, the one or more programs may be configured to include instructions to, when executed by a processor of an electronic device, cause the electronic device to, while identifying whether a communication link is established based on a WLAN using first communication circuitry of a plurality of communication circuitry in response to an input for an outgoing call related to an emergency service, display, on a display, a first user interface related to the outgoing call. The one or more programs may be configured to include the instructions to, when executed by the processor of the electronic device, cause the electronic device to, in a first state where the communication link is established based on the WLAN, using the first user interface, during a first specified time, request a first outgoing connect for the outgoing call using second communication circuitry related to a cellular network. The one or more programs may be configured to include the instructions to, when executed by the processor of the electronic device, cause the electronic device to, after the first specified time, based on identifying a failure of the first outgoing connection, request a second outgoing connection for the outgoing call using the first communication circuitry during a second specified time. The one or more programs may be configured to include the instructions to, when executed by the processor of the electronic device, cause the electronic device to, after the second specified time, based on identifying a failure of the second outgoing connection, change the first user interface displayed on the display to a second user interface for transmitting a message to a satellite using third communication circuitry related to the satellite. The one or more programs may be configured to include the instructions to, when executed by the processor of the electronic device, cause the electronic device to, in a second state distinct from the first state, in response to the input, request the first outgoing connection for the outgoing call using the second communication circuitry during a third specified time. The one or more programs may be configured to include the instructions to, when executed by the processor of the electronic device, cause the electronic device to, after the third specified time, based on identifying a failure of the first outgoing connection, display the second user interface by bypassing a request for the second outgoing connection.

According to an embodiment, in an electronic device, the electronic device may include a display, a plurality of communication circuitry, and a processor. The processor may be configured to, while displaying, on the display, a first user interface related to an outgoing call in response to an input for the outgoing call related to an emergency service, identify whether a communication link is established based on a WLAN using first communication circuitry of the plurality of communication circuitry. The processor may be configured to, in a first state where the communication link is established based on the WLAN, request a first outgoing connection for the outgoing call using second communication circuitry related to a cellular network. The processor may be configured to, during a first specified time requesting the first outgoing connection, display, on the display, a first visual object indicating the first outgoing connection being requested, using the second communication circuitry. The processor may be configured to, after the first specified time, based on identifying a failure of the first outgoing connection, request a second outgoing connection for the outgoing call using the first communication circuitry. The processor may be configured to, during a second specified time requesting the second outgoing connection, display, on the display, a second visual object indicating the second outgoing connection being requested, by replacing the first visual object. The processor may be configured to, after the second specified time, based on identifying a failure of the second outgoing connection, display a second user interface for transmitting a message to a satellite using third communication circuitry related to the satellite by replacing the first user interface displayed on the display.

According to an embodiment, in a method performed by an electronic device, the method may include, while displaying, on a display, a first user interface related to an outgoing call in response to an input for the outgoing call related to an emergency service, identifying whether a communication link is established based on a WLAN using first communication circuitry of a plurality of communication circuitry. The method may include, in a first state where the communication link is established based on the WLAN, requesting a first outgoing connection for the outgoing call using second communication circuitry related to a cellular network. The method may include, during a first specified time requesting the first outgoing connection, displaying, on the display, a first visual object indicating the first outgoing connection being requested, using the second communication circuitry. The method may include, after the first specified time, based on identifying a failure of the first outgoing connection, requesting a second outgoing connection for the outgoing call using the first communication circuitry. The method may include, during a second specified time requesting the second outgoing connection, displaying, on the display, a second visual object indicating the second outgoing connection being requested, by replacing the first visual object. The method may include, after the second specified time, based on identifying a failure of the second outgoing connection, displaying a second user interface for transmitting a message to a satellite using third communication circuitry related to the satellite by replacing the first user interface displayed on the display.

According to an embodiment, in a computer readable storage medium including one or more programs, the one or more programs may include instructions to, when executed by a processor of an electronic device, cause the electronic device to, while displaying, on a display, a first user interface related to an outgoing call in response to an input for the outgoing call related to an emergency service, identify whether a communication link is established based on a WLAN using first communication circuitry of a plurality of communication circuitry. The one or more programs may include the instructions to, when executed by the processor of the electronic device, cause the electronic device to, in a first state where the communication link is established based on the WLAN, request a first outgoing connection for the outgoing call using second communication circuitry related to a cellular network. The one or more programs may include the instructions to, when executed by the processor of the electronic device, cause the electronic device to, during a first specified time requesting the first outgoing connection, display, on the display, a first visual object indicating the first outgoing connection being requested, using the second communication circuitry. The one or more programs may include the instructions to, when executed by the processor of the electronic device, cause the electronic device to, after the first specified time, based on identifying a failure of the first outgoing connection, request a second outgoing connection for the outgoing call using the first communication circuitry. The one or more programs may include the instructions to, when executed by the processor of the electronic device, cause the electronic device to, during a second specified time requesting the second outgoing connection, display, on the display, a second visual object indicating the second outgoing connection being requested, by replacing the first visual object. The one or more programs may include the instructions to, when executed by the processor of the electronic device, cause the electronic device to, after the second specified time, based on identifying a failure of the second outgoing connection, display a second user interface for transmitting a message to a satellite using third communication circuitry related to the satellite by replacing the first user interface displayed on the display.

### [Description of the Drawings]

FIG. 1 illustrates an example of a user interface (UI) for an electronic device to transmit a message to a satellite, according to an embodiment.
FIG. 2 illustrates an exemplary block diagram of an electronic device according to an embodiment.
FIG. 3 is an exemplary flowchart indicating an operation of an electronic device according to an embodiment.
FIG. 4 is an exemplary signal flowchart for an electronic device to connect an outgoing call through communication circuitry, according to an embodiment.
FIG. 5 illustrates an exemplary user interface displayed on a display by an electronic device during a specified time, according to an embodiment.
FIG. 6 is an exemplary signal flowchart for an electronic device to connect an outgoing call through communication circuitry, according to an embodiment.
FIG. 7 illustrates an exemplary user interface displayed on a display by an electronic device during a specified time, according to an embodiment.
FIGS. 8A and 8B illustrate an exemplary user interface displayed on a display by an electronic device after a specified time, according to an embodiment.
FIG. 9 is an exemplary signal flowchart for an electronic device to connect an outgoing call through communication circuitry, according to an embodiment.
FIG. 10 illustrates an exemplary user interface displayed on a display by an electronic device after a specified time, according to an embodiment.
FIG. 11 illustrates an example of an operation in which an electronic device displays a user interface related to a satellite, according to an embodiment.
FIG. 12 illustrates an example of an operation in which an electronic device displays an exemplary visual object indicating a restriction on a satellite connection, according to an embodiment.
FIG. 13 illustrates an example of an operation in which an electronic device displays a visual object for obtaining a message to be transmitted to a satellite, according to an embodiment.
FIG. 14 illustrates an example of an operation in which an electronic device displays a visual object for establishing a connection with a satellite based on identifying a number related to an emergency service, according to an embodiment.
FIG. 15 is an exemplary flowchart indicating an operation of an electronic device according to an embodiment.
FIG. 16 is a block diagram of an electronic device in a network environment according to various embodiments.

### [Mode for Invention]

Hereinafter, various embodiments of the present document will be described with reference to accompanying drawings.

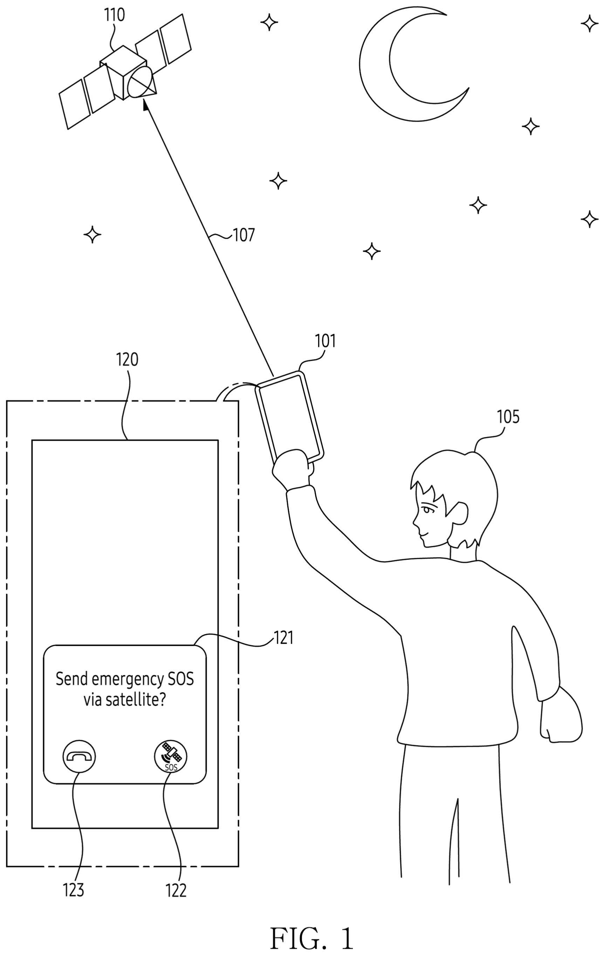

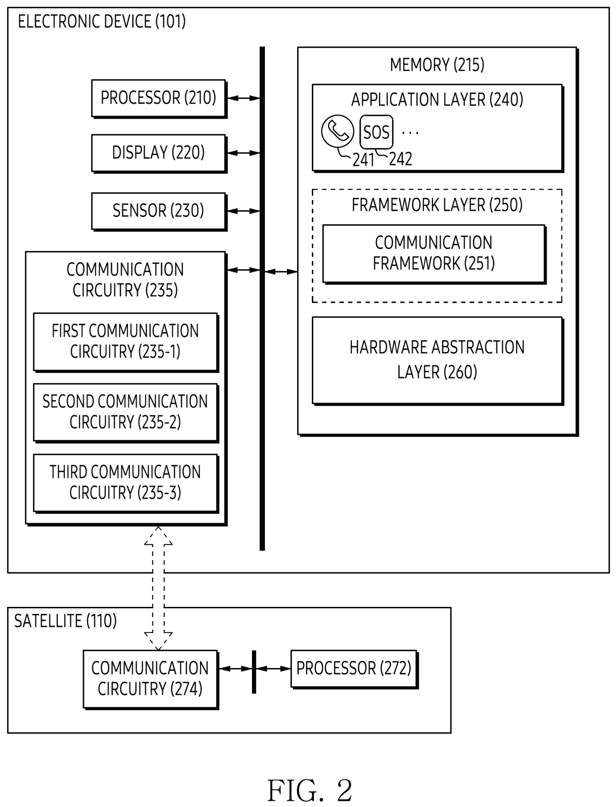

FIG. 1 illustrates an example of a user interface (UI) for an electronic device to transmit a message to a satellite, according to an embodiment. Referring to FIG. 1, an electronic device 101 according to an embodiment may include a terminal that is owned by a user 105. The terminal may include a personal computer (PC) such as a laptop or a desktop, a smartphone, a smartpad, a tablet PC, a smartwatch, and a smart accessory such as a head-mounted device (HMD). A satellite 110 according to an embodiment may include an artificial structure that moves based on an orbit corresponding to a celestial body such as a planet (e.g., Earth) or the moon. The satellite 110 may be set to stay in a specified orbit during a specified time. However, it is not limited thereto. The satellite 110 may perform an operation such as communication, navigation, and/or observation. One or more hardware configurations included in the electronic device 101 and/or the satellite 110 will be described later in FIG. 2.

According to an embodiment, the electronic device 101 may identify a network state of the electronic device 101 in response to an input for an outgoing call related to an emergency service. In order to identify the network state, the electronic device 101 may identify whether a communication link is established based on a wireless local area network (WLAN). The electronic device 101 may display a user interface (UI) (not illustrated) related to the outgoing call on a display while identifying whether the communication link is established. The input for the outgoing call related to the emergency service may include an input for an emergency telephone number.

For example, in a first state where the communication link is established based on the WLAN, the electronic device 101 may request a first outgoing connection for the outgoing call through a cellular network during a first specified time (e.g., 20 seconds). The electronic device 101 may request a second outgoing connection through the WLAN during a second specified time (e.g., 10 seconds) based on identifying a failure of the first outgoing connection, after the first specified time. The electronic device 101 may change the user interface to another user interface (e.g., a user interface 120) related to the satellite 110 based on identifying a failure of the second outgoing connection, after the second specified time. As an example, in a case that the first outgoing connection or the second outgoing connection is successful, the electronic device 101 may perform the outgoing call using communication circuitry related to the first outgoing connection or the second outgoing connection. As an example, the first specified time may be relatively longer than the second specified time.

For example, in a second state where the communication link is not established based on the WLAN, the electronic device 101 may request the first outgoing connection during a third specified time including the first specified time and the second specified time. The electronic device 101 may display the other user interface on the display by bypassing a request for the second outgoing connection, based on identifying a failure of the first outgoing connection, after the third specified time. The electronic device 101 may identify a radio resource control (RRC) idle state of the electronic device 101 based on identifying a failure of the first outgoing connection and/or the second outgoing connection. The electronic device 101 may display the other user interface (e.g., the user interface 120) on the display based on identifying the RRC idle state. The other user interface (e.g., the user interface 120) may be used to transmit a message to the satellite.

For example, the user interface 120 may include a text object indicating whether to establish a connection 107 with the satellite (e.g., "Send emergency SOS via satellite?"), a visual object 122 indicating establishing the connection 107, and/or a visual object 123 indicating not establishing the connection 107 with the satellite. For example, the electronic device 101 may not establish the connection with the satellite in response to receiving an input for the visual object 123. The electronic device 101 may temporarily refrain from displaying the user interface 120 based on receiving an input indicating selecting of the visual object 123.

For example, the electronic device 101 may identify an input for transmitting a message to the satellite 110 using the user interface 120. The electronic device 101 may identify the input for transmitting the message to the satellite 110 in a state where the electronic device 101 is not connected to one or more base stations. The electronic device 101 may identify the input for transmitting the message to the satellite 110 based on the RRC idle state of the electronic device maintained during a reference time. The input for transmitting the message to the satellite 110 may include a user input for the visual object 122. The input for transmitting the message to the satellite 110 may include an input for obtaining a message to be transmitted to the satellite 110 and/or an input for obtaining a message to be received from the satellite 110.

For example, the electronic device 101 may display, on the display, a visual object (not illustrated) for inputting the message to be transmitted to the satellite 110 based on execution of a message application. The electronic device 101 may obtain the message to be transmitted to the satellite 110 by using the visual object for inputting the message. The visual object for inputting the message may be displayed in the visual object 121 by replacing a text object. However, it is not limited thereto. For example, the message may include a signal for transmitting a text message, a multimedia messaging service (MMS), and/or an outgoing call, which are to be transmitted to another electronic device, a base station, and/or a ground station through the satellite 110 by the electronic device 101 . However, it is not limited thereto.

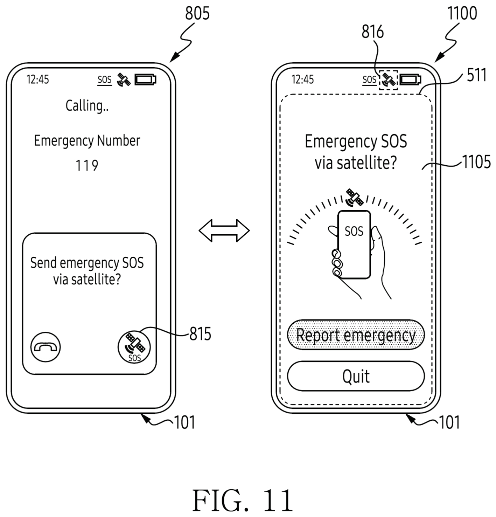

For example, the electronic device 101 may display, on the display, a user interface for identifying a relative position of the satellite 110 with respect to the electronic device 101 based on receiving an input indicating selecting of the visual object 122. An operation in which the electronic device 101 displays, on the display, the user interface for identifying the relative position of the satellite 110 will be described later with reference to FIG. 11.

As described above, the electronic device 101 according to an embodiment may request an outgoing connection during a specified time based on the WLAN and/or the cellular network in response to the input for the outgoing call related to the emergency service. The electronic device 101 may identify the RRC idle state of the electronic device 101 in a case that a request for the outgoing connection based on the WLAN and/or the cellular network fails during the specified time. The electronic device 101 may display the user interface 120 for establishing the connection with the satellite on the display based on identifying the RRC idle state.

FIG. 2 illustrates an exemplary block diagram of an electronic device according to an embodiment. An electronic device 101 of FIG. 2 may include the electronic device 101 of FIG. 1.

According to an embodiment, the electronic device 101 may include at least one of a processor 210, memory 215, a display 220, or communication circuitry 235. The processor 210, the memory 215, the display 220, and the communication circuitry 235 may be electronically and/or operably connected to each other by an electronical component such as a communication bus. Hereinafter, hardware being operably coupled may mean that a direct connection or an indirect connection between the hardware is established by wire or wirelessly so that second hardware among the hardware is controlled by first hardware. Although illustrated based on different blocks, an embodiment is not limited thereto, and a portion (e.g., at least a portion of the processor 210, the memory 215, and the communication circuitry 235) of hardware of FIG. 2 may be included in a single integrated circuit, such as a system on a chip (SoC). A type and/or the number of hardware included in the electronic device 101 is not limited to what is illustrated in FIG. 2. For example, the electronic device 101 may include only some of hardware components illustrated in FIG. 2.

The processor 210 of the electronic device 101 according to an embodiment may include hardware for processing data based on one or more instructions. The hardware for processing data may include, for example, an arithmetic and logic unit (ALU), a floating point unit (FPU), a field programmable gate array (FPGA), a central processing unit (CPU), and/or an application processor (AP). The processor 210 may have a structure of a single-core processor or may have a structure of a multi-core processor such as a dual core, a quad core, or a hexa core.

According to an embodiment, the memory 215 of the electronic device 101 may include a hardware component for storing data and/or an instruction inputted to and/or outputted from the processor 210 of the electronic device 101. The memory 215 may include, for example, volatile memory, such as random-access memory (RAM), and/or non-volatile memory, such as read-only memory (ROM). The volatile memory may include, for example, at least one of dynamic RAM (DRAM), static RAM (SRAM), Cache RAM, and pseudo-SRAM (PSRAM). The non-volatile memory may include, for example, at least one of programmable ROM (PROM), erasable PROM (EPROM), electrically erasable PROM (EEPROM), flash memory, a hard disk, a compact disc, a solid state drive (SSD), and an embedded multi media card (eMMC).

In an embodiment, the display 220 of the electronic device 101 may output visualized information (e.g., the user interface 120 of FIG. 1) to a user (e.g., the user 105 of FIG. 1). For example, the display 220 may output visualized information to the user by being controlled by the processor 210 including circuitry such as a graphic processing unit (GPU). The display 220 may include a flat panel display (FPD) and/or electronic paper. The FPD may include a liquid crystal display (LCD), a plasma display panel (PDP), and/or one or more light emitting diodes (LEDs). The LED may include an organic LED (OLED).

According to an embodiment, a sensor 230 of the electronic device 101 may generate electronic information that may be processed by the processor 210 and/or the memory 215 of the electronic device 101 from non-electronic information related to the electronic device 101. The information may be referred to as sensor data. The sensor 230 may include a global positioning system (GPS) sensor for detecting a geographic location of the electronic device 101, an image sensor, an illumination sensor, and/or a time-of-flight (ToF) sensor, and an inertial measurement unit (IMU) for detecting a physical motion of the electronic device 101. For example, using the sensor 230 including the IMU, the electronic device 101 may identify a direction of the electronic device 101.

In an embodiment, the communication circuitry 235 of the electronic device 101 may include a hardware component for supporting transmission and/or reception of an electrical signal between the electronic device 101 and an external electronic device (e.g., a satellite 110). The communication circuitry 235 may include, for example, at least one of a MODEM, an antenna, and an optic/electronic (O/E) converter. The communication circuitry 235 may support transmission and/or reception of an electrical signal based on various types of protocols, such as Ethernet, a local area network (LAN), a wide area network (WAN), wireless fidelity (WiFi), Bluetooth, Bluetooth low energy (BLE), ZigBee, long term evolution (LTE), and 5G new radio (NR). The communication circuitry 235 may be used for various radio access technologies (RATs). The communication circuitry may be used to perform Bluetooth communication, wireless local area network (WLAN) communication, or ultra-wideband (UWB) communication. The communication circuitry 235 may be configured with at least one communication circuitry. The communication circuitry 235 may be referred to as a plurality of communication circuitry in terms of including first communication circuitry 235-1, second communication circuitry 235-2, and/or third communication circuitry 235-3.

For example, the electronic device 101 may establish a connection with an external electronic device (e.g., a router), logically or physically, based on a WLAN using the first communication circuitry 235-1. The electronic device 101 may request an outgoing call (e.g., voice over WiFi (VoWiFi)) based on the WLAN, using the first communication circuitry 235-1.

For example, the electronic device 101 may perform a communication link with a base station using the second communication circuitry 235-2 related to a cellular network. The second communication circuitry 235-2 may include a universal integrated circuit card (UICC). The processor 210 may perform authentication between the electronic device 101 and a server operated by a communication service provider through a universal subscriber identity module (USIM) installed inside the UICC. For example, the UICC (e.g., the USIM or a subscriber identity module (SIM)) may be configured as a form of an independent chip in the electronic device 101. For example, the UICC (e.g., an embedded SIM (eSIM)) may be configured in a form embedded in the electronic device 101. As an example, the electronic device 101 may support a dual SIM function. The electronic device 101 may request an outgoing connection for an outgoing call based on the cellular network during a specified time from the server operated by the communication service provider using the second communication circuitry 235-2.

For example, the electronic device 101 may establish a connection (e.g., a non-terrestrial network (NTN)) with the satellite 110 using the third communication circuitry 235-3. For example, the connection with the satellite 110 may be established based on a frequency range relatively lower than a connection between the satellite 110 and a ground station. Transmission power for the electronic device 101 to transmit a message to the satellite 110 based on the connection established with the satellite 110 may be included in a relatively higher range than other transmission power for transmitting a signal based on a connection between the electronic device 101 and a base station (not illustrated). For example, the electronic device 101 may establish the connection in response to an input (e.g., an input for the visual object 121 of FIG. 1) indicating transmitting a message to reduce power consumption of a battery used to establish the connection with the satellite 110. However, it is not limited thereto.

According to an embodiment, in the memory 215 of the electronic device 101, one or more instructions (or commands) indicating a calculation and/or an operation to be performed by the processor 210 of the electronic device 101 on data may be stored. A set of one or more instructions may be referred to as a program, firmware, an operating system, a process, a routine, a sub-routine, and/or an application. Hereinafter, an application being installed in an electronic device (e.g., the electronic device 101) may mean that one or more instructions provided in a form of an application are stored in the memory 215, and that the one or more applications are stored in a format (e.g., a file with an extension specified by an operating system of the electronic device 101) executable by a processor of the electronic device.

Referring to FIG. 2, programs installed in the electronic device 101 may be classified into any one layer among different layers including an application layer 240, a framework layer 250, and/or a hardware abstraction layer (HAL) 260, based on a target. For example, programs (e.g., drivers) designed to target hardware (e.g., the display 220 and/or the communication circuitry 235) of the electronic device 101 may be classified in the hardware abstraction layer 260. For example, programs (e.g., a communication framework 251) designed to target at least one of the hardware abstraction layer 260 and/or the application layer 240 may be classified in the framework layer 250. Programs classified as the framework layer 250 may provide an application programming interface (API) executable based on another program.

For example, programs designed to target a user (e.g., the user 105 of FIG. 1) controlling the electronic device 101 may be classified in the application layer 240. As an example of programs classified as the application layer 240, a call software application 241, and/or an emergency call (e.g., SOS) software application 242 are exemplified, but an embodiment is not limited thereto. For example, the programs (e.g., a software application) classified as the application layer 240 may cause execution of a function supported by the programs classified as the framework layer 250, by calling an API.

For example, the electronic device 101 may obtain data indicating a strength of the connection using a communication interface used to establish the connection with the satellite 110 based on execution of the communication framework 251 (e.g., telephony). The electronic device 101 may perform data exchange with a communication service for providing the connection with the satellite 110 using the emergency call software application 242.

For example, an operation in which the electronic device 101 establishes the connection with the satellite 110 may be performed by calling an application programming interface (API) provided based on the execution of the communication framework 251. The API may be called based on execution of a program included in the application layer 240. For example, based on execution of the emergency call software application 242, the electronic device 101 may call an API related to data on the satellite 110 to be processed by the emergency call software application 242, using the communication framework 251. An operation in which the electronic device 101 displays a user interface for establishing the connection with the satellite 110 on the display based on the execution of the emergency call software application 242 will be described later with reference to FIG. 11.

Referring to FIG. 2, according to an embodiment, the electronic device 101 may communicate with the satellite 110 using the communication circuitry 235. The satellite 110 may include at least one of a processor 272 or communication circuitry 274. In the satellite 110, the processor 272 and the communication circuitry 274 may be electronically and/or operably connected to each other by an electronic component such as a communication bus. Each of the processor 272 and the communication circuitry 274 in the satellite 110 may correspond to each of the processor 210 and the communication circuitry 235 in the electronic device 101. In order to reduce repetition of a description, among descriptions for the processor 272 and the communication circuitry 274, a description overlapping with the processor 210 and the communication circuitry 235 in the electronic device 101 may be omitted.

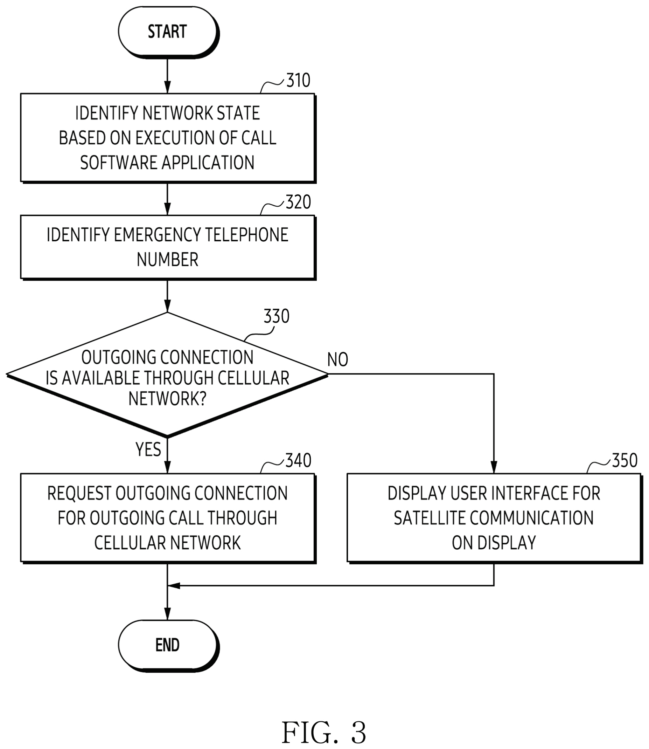

FIG. 3 is an exemplary flowchart indicating an operation of an electronic device according to an embodiment. An electronic device 101 of FIG. 3 may include the electronic device 101 of FIGS. 1 to 2. At least one of operations of FIG. 3 may be performed by the electronic device 101 of FIG. 2 and/or the processor 210 of FIG. 2.

Referring to FIG. 3, in operation 310, a processor according to an embodiment may identify a network state based on execution of a call software application. For example, the processor may identify whether a communication link is established based on a WLAN using first communication circuitry (e.g., the first communication circuitry 235-1 of FIG. 2) in response to an input for an outgoing call related to an emergency service.

Referring to FIG. 3, in operation 320, the processor according to an embodiment may identify an emergency telephone number. For example, the processor may identify execution of a call software application (e.g., the call software application 241 of FIG. 2) before identifying the input for the outgoing call related to the emergency service. The processor may identify a user input for inputting the emergency telephone number based on the execution of the call software application. The processor may identify an input for performing the outgoing call, using the emergency telephone number. The processor may display a first user interface related to the outgoing call on a display in response to the input for performing the outgoing call.

Referring to FIG. 3, in operation 330, the processor according to an embodiment may identify whether an outgoing connection is available through a cellular network. An operation of identifying whether the outgoing connection is available through the cellular network may be included in an operation in which the processor identifies whether the communication link is established based on the WLAN using the first communication circuitry (e.g., the first communication circuitry 235-1 of FIG. 2) in response to the input for the outgoing call related to the emergency service. For example, the processor may identify whether the outgoing connection may be requested using the first communication circuitry. The processor may identify whether registration is available for a service (e.g., VoWiFi) that allows an outgoing connection through the first communication circuitry. As an example, in a case of being registered for the service, the processor may perform an operation based on a first state, and in a case of not being registered for the service, the electronic device may perform an operation based on a second state.

Referring to FIG. 3, in operation 340, the processor according to an embodiment may request the outgoing connection for the outgoing call through the cellular network. For example, in the first state where the communication link is established based on the WLAN, the processor may request a first outgoing connection for the outgoing call using second communication circuitry (e.g., the second communication circuitry 235-2 of FIG. 2) related to the cellular network during a first specified time, using the first user interface. The processor may request a second outgoing connection for the outgoing call using the first communication circuitry during a second specified time, based on identifying a failure of the first outgoing connection after the first specified time.

For example, in the second state where the communication link is not established based on the WLAN, the processor may request the first outgoing connection for the outgoing call during a third specified time using the second communication circuitry. The third specified time may include the first specified time and the second specified time.

Referring to FIG. 3, in operation 350, the processor according to an embodiment may display a user interface (e.g., the user interface 120 of FIG. 1) for satellite communication on the display. In the first state where the communication link is established based on the WLAN, based on identifying a failure of the second outgoing connection after the second specified time, the processor may display, on the display, a user interface for transmitting a message to a satellite using third communication circuitry (e.g., the third communication circuitry 235-3 of FIG. 2) related to the satellite. For example, in the second state where the communication link is not established based on the WLAN, the processor may display the user interface for transmitting the message to the satellite by bypassing a request of the second outgoing connection based on identifying a failure of the first outgoing connection.

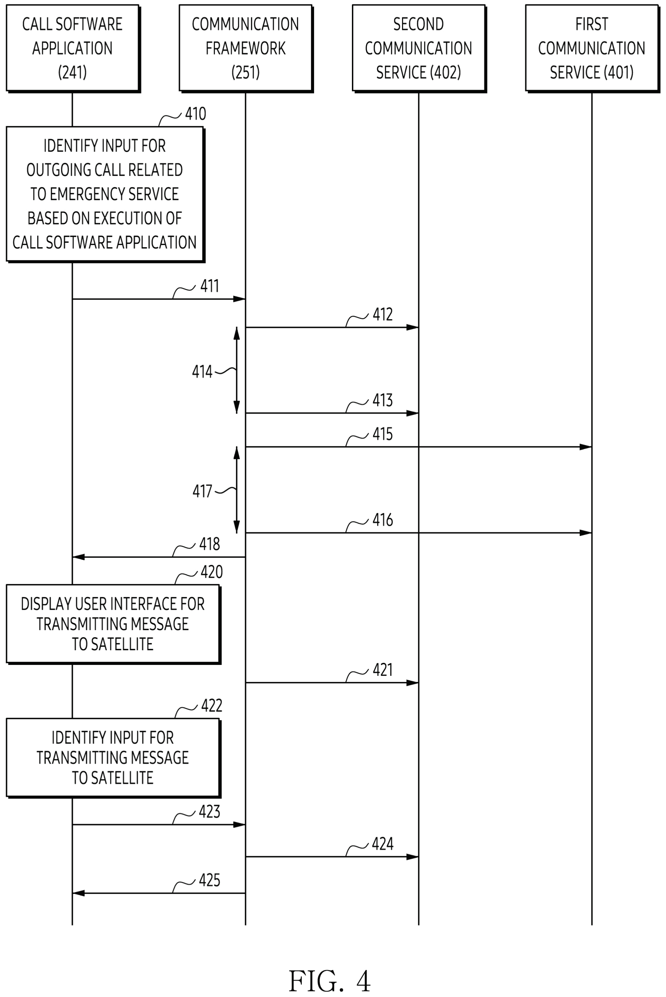

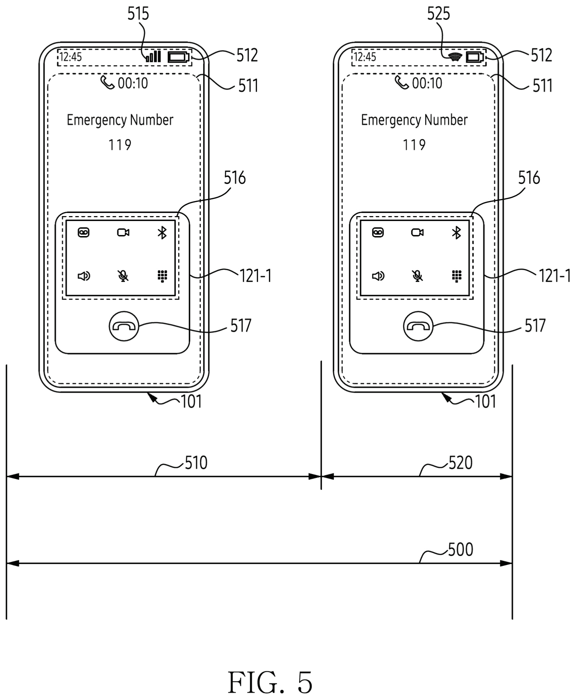

FIG. 4 is an exemplary signal flowchart for an electronic device to connect an outgoing call through communication circuitry, according to an embodiment. FIG. 5 illustrates an exemplary user interface displayed on a display by an electronic device during a specified time, according to an embodiment. An electronic device 101 of FIG. 4 may include the electronic device 101 of FIGS. 1 to 3. An electronic device 101 of FIG. 5 may include the electronic device 101 of FIGS. 1 to 4. The electronic device 101 of FIGS. 4 and 5 may be included in a state where a communication link is established based on a WLAN through first communication circuitry (e.g., the first communication circuitry 235-1 of FIG. 2).

Referring to FIG. 4, in operation 410, the electronic device 101 may identify an input for an outgoing call related to an emergency service based on execution of a call software application. The input for the outgoing call may include an input for requesting an outgoing call for an emergency telephone number. The electronic device 101 may obtain a data signal 411 to be processed by a communication framework 251 based on identifying the input for the outgoing call. The electronic device 101 may identify whether the communication link is established based on the WLAN through the communication framework 251. However, it is not limited thereto.

For example, the electronic device 101 may transmit a data signal 412 for requesting an outgoing connection to a second communication service 402 related to a cellular network using second communication circuitry (e.g., the second communication circuitry 235-2 of FIG. 2) through the communication framework 251. The data signal 412 may include a signal for accessing the second communication service 402 based on an emergency call code radio access technology (ECC RAT). The electronic device 101 may request the outgoing connection during a first specified time 414 based on transmitting the data signal 412. The electronic device 101 may identify a failure of the outgoing connection after the first specified time 414. The electronic device 101 may identify the failure of the outgoing connection based on transmitting a data signal 413 distinct from the data signal 412 to the second communication service 402.

For example, based on identifying the failure of the outgoing connection using the second communication circuitry, the electronic device 101 may request an outgoing connection based on the WLAN using the first communication circuitry (e.g., the first communication circuitry 235-1 of FIG. 1) during a second specified time 417. The electronic device 101 may transmit a data signal 415 to a first communication service 401 related to the WLAN, in order to request the outgoing connection. The first communication service 401 may include a server providing a service for providing an outgoing call based on the WLAN. The electronic device 101 may transmit the data signal 415 to the first communication service 401 in a first state registered with the service providing the outgoing call based on the WLAN. However, it is not limited thereto.

For example, the electronic device 101 may identify a failure of the outgoing connection based on transmitting a data signal 416 distinct from the data signal 415 to the first communication service 401 after the second specified time 417. The electronic device 101 may obtain a data signal 418 for requesting display of a user interface related to a satellite based on identifying a failure of the outgoing call related to the emergency service using the first communication circuitry and/or the second communication circuitry.

Referring to FIG. 5, during a third specified time 500, a state of the electronic device 101 classified according to a type of network used to request an outgoing call is illustrated. For example, in a case that a communication link is established based on a WLAN, the electronic device 101 may distinguish the third specified time 500 for performing an outgoing connection through a network distinct from satellite communication into a first specified time 510 and a second specified time 520. The first specified time 510 may be longer than the second specified time 520.

For example, the electronic device 101 may request the outgoing connection to a second communication service (e.g., the second communication service 402 of FIG. 4) using second communication circuitry (e.g., the second communication circuitry 235-2 of FIG. 2) during the first specified time 510. The first specified time 510 may be referred to as the first specified time 414 of FIG. 4.

For example, during the first specified time 510, the electronic device 101 may display a user interface related to an outgoing call on a display while requesting the outgoing connection. The electronic device 101 may display a visual object 121-1 including one or more icons 516 related to the outgoing call and an icon 517 indicating an end of the outgoing connection on a first partial area 511 of the display. The electronic device 101 may display a text object (e.g., an emergency telephone number) distinct from the visual object 121-1 on the first partial area 511. For example, the electronic device 101 may display a text object indicating a time when the outgoing connection has been performed on the first partial area 511. For example, the electronic device 101 may display a text object (e.g., connecting) indicating that the outgoing connection is being performed on the first partial area 511. However, it is not limited thereto. An icon may be referred to as a visual object in terms of being visually represented.

For example, the one or more icons 516 related to the outgoing call may include, after the outgoing call is connected, an icon for recording an audio signal, an icon for changing a voice call to a video call, an icon for connecting to an external electronic device (e.g., earphones), an icon (e.g., speaker) for outputting an audio signal through a speaker, an icon (e.g., mute) indicating mute, and/or an icon for displaying a keypad on the display. However, it is not limited thereto. The one or more icons 516 related to the outgoing call may further include a user interface available while a user performs the outgoing call.

For example, during the first specified time 510, the electronic device 101 may display the visual object 121-1 on the first partial area, and display a visual object 515 indicating that the outgoing call is being connected through the second communication circuitry on a second partial area 512 of the display. The visual object 515 may indicate a cellular network.

For example, the electronic device 101 may display the visual object 515 indicating that the outgoing connection is being requested through the cellular network during the first specified time 510 requesting the outgoing connection through the cellular network. However, it is not limited thereto. Independent of displaying the visual object 515 on the second partial area 512, the electronic device 101 may display a pop-up window (not illustrated) indicating that the outgoing connection is being requested through the cellular network by overlapping a user interface displayed on the display. The pop-up window may include a text object indicating that the outgoing connection is being requested through the cellular network. The electronic device 101 may output an audio signal indicating that the outgoing connection is being requested through the cellular network through a speaker.

For example, the electronic device 101 may request the outgoing connection using first communication circuitry (e.g., the first communication circuitry 235-1 of FIG. 2) during the second specified time 520 based on identifying a failure of the outgoing connection after the first specified time 510. The electronic device 101 may transmit a data signal (e.g., the data signal 415 of FIG. 4) for requesting the outgoing connection to a first communication service 401.

For example, during the second specified time, the electronic device 101 may display the visual object 121-1 on the first partial area 511 and a visual object 525 indicating the first communication circuitry on the second partial area 512. The visual object 525 may indicate the WLAN. The electronic device 101 may display the visual object 525 indicating that the outgoing connection is being requested through the WLAN during the second specified time 520 requesting the outgoing connection through the WLAN. However, it is not limited thereto. Independent of displaying the visual object 525 on the second partial area 512, the electronic device 101 may display a pop-up window (not illustrated) indicating that the outgoing connection is being requested through the WLAN by overlapping the user interface displayed on the display. The pop-up window may include a text object indicating that the outgoing connection is being requested through the WLAN. The electronic device 101 may output an audio signal indicating that the outgoing connection is being requested through the WLAN through the speaker.

Referring back to FIG. 4, based on obtaining the data signal 418, in operation 420, the electronic device 101 may display a user interface (e.g., the user interface 120 of FIG. 1) for transmitting a message to the satellite on the display. For example, the electronic device 101 may change a user interface displayed on the second partial area 512 of FIG. 5 to the user interface for transmitting the message to the satellite.

For example, while displaying the user interface for transmitting the message to the satellite on the display, the electronic device 101 may transmit a data signal 421 for requesting the outgoing connection to the second communication service 402 using the second communication circuitry related to the cellular network, in a background state. The electronic device 101 may maintain a request of the emergency service until identifying an input for performing satellite communication by attempting the outgoing connection to the second communication service 402 using the second communication circuitry related to the cellular network in the background state.

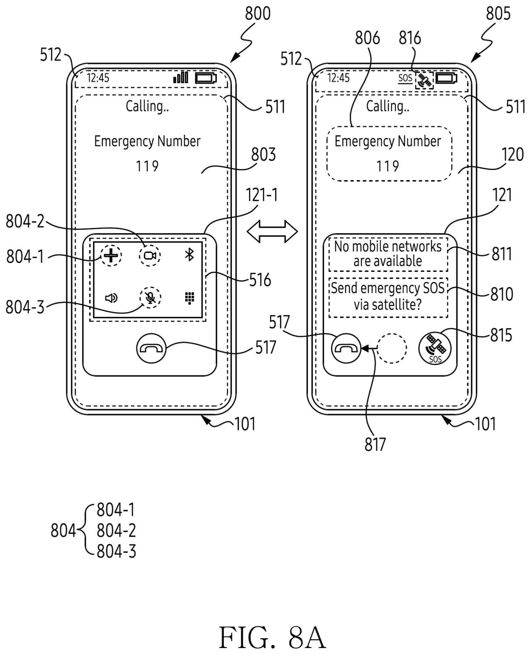

For example, in a state of displaying the user interface for transmitting the message to the satellite on the display, the electronic device 101 may maintain transmission of a data signal to communication services (e.g., the first communication service 401 and/or the second communication service 402) processed during the first specified time 414 and/or the second specified time 417. The electronic device 101 may transmit the data signal (e.g., the data signal 412) requesting the outgoing connection to the second communication service 402 while displaying the user interface. The electronic device 101 may transmit the data signal (e.g., the data signal 415) requesting the outgoing connection to the first communication service 401 based on a specified period, while displaying the user interface. For example, after performing operation 422, the electronic device 101 may temporarily refrain from transmitting the data signal for requesting the outgoing connection to the first communication service 401 and/or the second communication service 402. For example, in the operation 422, the electronic device 101 may identify an input for transmitting the message to the satellite using the user interface for transmitting the message to the satellite. Performing operation 421 and the operation 422 by the electronic device 101 will be described later in more detail with reference to FIG. 8A.

For example, the electronic device 101 may obtain a data signal 423 to be processed by the communication framework 251 in response to identifying the input for transmitting the message to the satellite. The data signal 423 may include information indicating that a request for the outgoing connection through the cellular network is ceased, in a background state.

For example, the electronic device 101 may transmit a data signal 424 to cease requesting the outgoing connection to the second communication service 402 based on processing the data signal 423 through the communication framework 251. The electronic device 101 may obtain a data signal 425 to be processed by the call software application 241 based on transmitting the data signal 424. The data signal 425 may include information indicating that a request for the outgoing connection is ceased. The electronic device 101 may display a user interface for performing a connection with the satellite based on obtaining the data signal 425. An operation of displaying the user interface for performing the connection with the satellite by the electronic device will be described later with reference to FIG. 11.

As described above, the electronic device 101 according to an embodiment may distinguish a specified time (e.g., the third specified time 500) for requesting the outgoing call related to the emergency service using communication distinct from the satellite communication into the first specified time (e.g., the first specified time 510) for requesting the outgoing call through the cellular network and the second specified time (e.g., the second specified time 520) for requesting the outgoing call through the WLAN. The electronic device 101 may display a visual object (e.g., the visual object 515 and/or the visual object 525) on the display to inform the user of the network used in each of the first specified time and the second specified time.

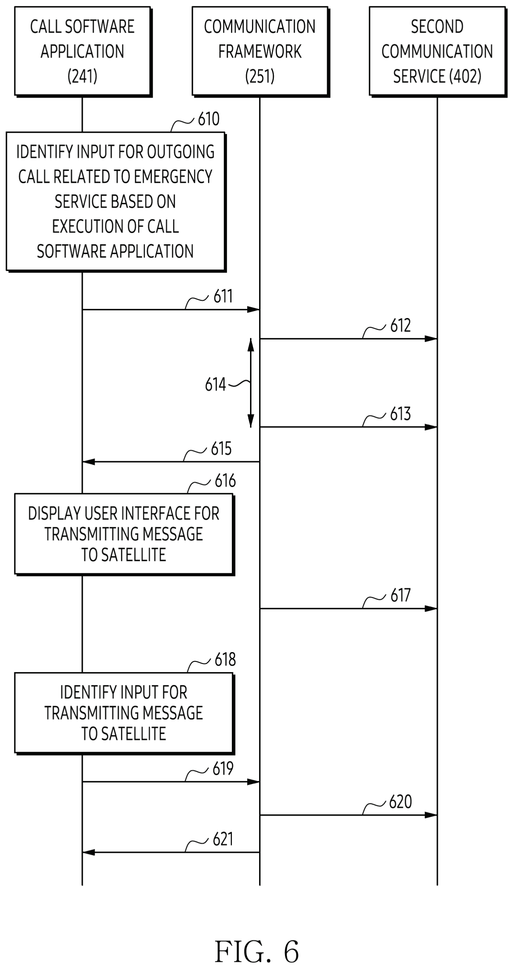

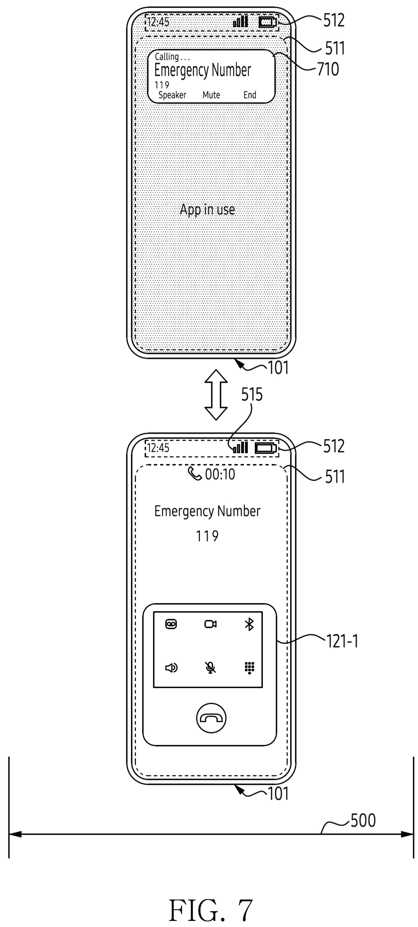

FIG. 6 is an exemplary signal flowchart for an electronic device to connect an outgoing call through communication circuitry, according to an embodiment. FIG. 7 illustrates an exemplary user interface displayed on a display by an electronic device during a specified time, according to an embodiment. An electronic device 101 of FIG. 6 may include the electronic device 101 of FIGS. 1 to 5. An electronic device 101 of FIG. 7 may include the electronic device 101 of FIGS. 1 to 6. The electronic device 101 of FIGS. 6 and 7 may be included in a state where a communication link is not established based on a WLAN through first communication circuitry (e.g., the first communication circuitry 235-1 of FIG. 2).

Referring to FIG. 6, in operation 610, the electronic device 101 according to an embodiment may identify an input for an outgoing call related to an emergency service based on execution of a call software application. The operation 610 may be referred to the operation 410.

For example, the electronic device 101 may transmit a data signal 612 to a second communication service 402 using second communication circuitry (e.g., the second communication circuitry 235-2 of FIG. 2) during a third specified time 614. The data signal 612 may be referred to the data signal 412 of FIG. 4. The third specified time 614 may be referred to the third specified time 500 of FIG. 5. In a state where a communication link is not established based on the WLAN, the electronic device 101 may request an outgoing connection through the second communication circuitry (e.g., the second communication circuitry 235-2 of FIG. 2) using the entire third specified time, without distinguishing the third specified time into a first specified time and a second specified time. A time (e.g., a first specified time 510) for requesting an outgoing connection based on a cellular network in a first state where the electronic device 101 establishes the communication link based on the WLAN may be shorter than a time (e.g., a third specified time 500) for requesting an outgoing connection based on the cellular network in a second state where the communication link is not established based on the WLAN.

For example, the electronic device 101 may identify a failure of the outgoing connection based on transmitting a data signal 613 to the second communication service 402 after the third specified time 614. The data signal 613 may be referred to the data signal 413 of FIG. 4. The electronic device 101 may obtain a data signal 615 for requesting display of a user interface related to a satellite based on identifying the failure of the outgoing connection. The data signal 615 may be referred to the data signal 418 of FIG. 4.

For example, in operation 616, the electronic device 101 may display a user interface for transmitting a message to the satellite, based on processing the data signal 615. The operation 616 performed by the electronic device 101 may be referred to the operation 420 of FIG. 4. While displaying the user interface for transmitting the message to the satellite, the electronic device 101 may transmit a data signal 617 to the second communication service 402 through a communication framework 251, in a background state. The data signal 617 may be referred to the data signal 421 of FIG. 4.

For example, in operation 618, the electronic device 101 may identify an input for transmitting the message to the satellite. The operation 618 may be referred to the operation 422 of FIG. 4. The electronic device 101 may obtain a data signal 619 based on performing the operation 618. The data signal 619 may be referred to the data signal 423 of FIG. 4, a data signal 620 may be referred to the data signal 424 of FIG. 4, and a data signal 621 may be referred to the data signal 425.

Referring to FIG. 7, a state where the electronic device 101 displays a user interface on a display while requesting an outgoing connection to a second communication service 402 during a third specified time 500 is illustrated. The third specified time 500 may be referred to the third specified time 614 of FIG. 6.

For example, during the third specified time 500, the electronic device 101 may display a visual object 121-1 related to an outgoing call on a first partial area 511 and a visual object 515 indicating a cellular network on a second partial area 512. However, it is not limited thereto.

For example, while executing another software application distinct from a call software application, the electronic device 101 may display an execution screen of the other software application on the display. While displaying the execution screen of the other software application, the electronic device 101 may display a pop-up window 710 corresponding to a user interface related to the outgoing call by overlapping at least a portion of the first partial area 511 and/or at least a portion of the second partial area 512. The pop-up window 710 may include an emergency telephone number related to an emergency service, a text object for outputting an audio signal through a speaker, a text object indicating silence, and/or a text object (e.g., End) indicating an end of the outgoing connection. During the third specified time 500, the electronic device 101 may display the execution screen of the other software application on the first partial area 511, display the visual object 515 indicating the cellular network on the second partial area 512, and display the pop-up window 710 by overlapping at least a portion of the first partial area 511 and/or at least a portion of the second partial area 512.

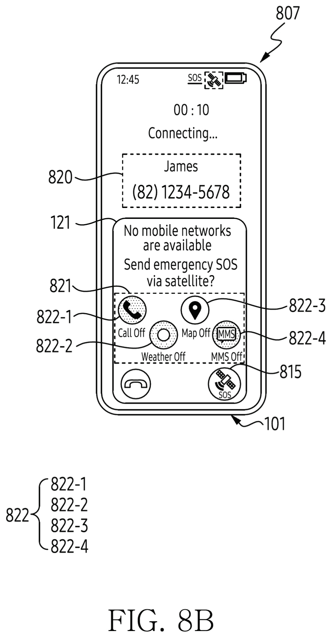

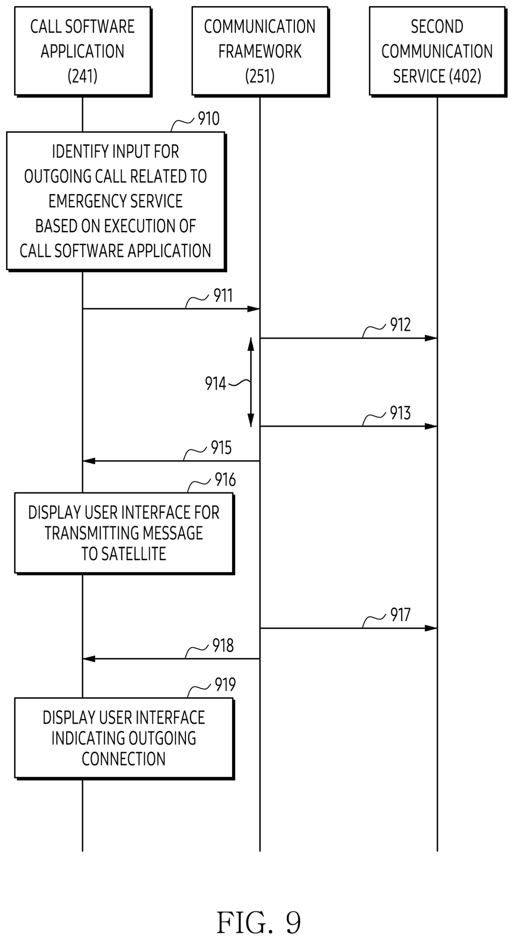

FIGS. 8A and 8B illustrate an exemplary user interface displayed on a display by an electronic device after a specified time, according to an embodiment. FIG. 9 is an exemplary signal flowchart for an electronic device to connect an outgoing call through communication circuitry, according to an embodiment. An electronic device 101 of FIGS. 8A and 8B may include the electronic device 101 of FIGS. 1 to 7. An electronic device 101 of FIG. 9 may include the electronic device 101 of FIGS. 1 to 8A and 8B.

Referring to FIG. 8A, a state 800 where the electronic device 101 according to an embodiment requests an outgoing connection through a network distinct from satellite communication is illustrated. The state 800 may include a first state where the electronic device 101 establishes a communication link based on a WLAN and a second state where the communication link is not established. In the state 800, the electronic device 101 may display a user interface 803. The user interface 803 may include a visual object 121-1. In the state 800, the visual object 121-1 may include one or more icons 516, and/or an icon 517. The electronic device 101 may display a visual object (e.g., the visual object 515 of FIG. 5) indicating a cellular network or a visual object (e.g., the visual object 525 of FIG. 5) indicating the WLAN on a second partial area 512 while displaying the visual object 121-1 on a first partial area 511. For example, in a case that an outgoing connection with a first communication service (e.g., the first communication service 401 of FIG. 4) and/or a second communication service (e.g., the second communication service 402 of FIG. 4) fails, the electronic device 101 may change at least one icon among the one or more icons 516. For example, in a case of identifying an input of a user for using an emergency service, the electronic device 101 may change at least one icon among the one or more icons 516.

For example, the electronic device 101 changing at least one icon among the one or more icons 516 may indicate changing a color of the at least one icon. For example, the electronic device 101 may change icons 804 among the one or more icons 516. Each of the icons 804 may correspond to each of the functions related to an outgoing call. For example, an icon 804-1 may correspond to a function for requesting a second outgoing call to another user different from a user matching a first outgoing call in a state of performing the first outgoing call. An icon 804-2 may correspond to a function for changing a voice call to a video call. An icon 804-3 may correspond to a mute function and/or a function (e.g., on hold) for switching from the state of performing the first outgoing call to a state for holding the first outgoing call. The electronic device 101 may notify the user that a function corresponding to each of the icons 804 is deactivated based on identifying a failure of the outgoing call or identifying the input for using the emergency service. The electronic device 101 may indicate deactivation of the function corresponding to each of the icons by changing a color (e.g., black) corresponding to the icons 804 to a different color (e.g., gray). However, it is not limited thereto.

For example, after a second specified time (e.g., the second specified time 417 of FIG. 4) or a third specified time (e.g., the third specified time 614 of FIG. 6), in a state 805, the electronic device 101 may display a user interface 120 for transmitting a message to a satellite. The electronic device 101 may display a visual object 816 indicating satellite communication on the second partial area 512 while displaying the user interface 120 on the display. The visual object 816 may indicate that the satellite communication is deactivated. The visual object 816 may indicate a state where a connection with the satellite is available. The visual object 816 may indicate use of third communication circuitry (e.g., the third communication circuitry 235-3 of FIG. 2). The user interface 120 may include a visual object 121.

For example, the visual object 121 in the state 805 may include information different from the visual object 121-1 in the state 800. The visual object 121 may include a text object 810 indicating whether to transmit the message to the satellite. The visual object 121 may include the icon 517 indicating an end of the outgoing connection and an icon 815 for establishing the communication link with the satellite. The visual object 121 may include a text object (e.g., no mobile networks are available) indicating a failure of the outgoing connection with the first communication service 401 of FIG. 4 and/or the second communication service 402 of FIG. 4. The icon 815 may include an image indicating the satellite.

For example, the electronic device 101 may change the one or more icons 516 to the text object 810 based on switching from the state 800 to the state 805. For example, the electronic device 101 may temporarily cease displaying the one or more icons 516 and display the text object 810. The electronic device 101 may change the visual object (e.g., the visual object 515 or the visual object 525 of FIG. 5) displayed on the second partial area 512 to the visual object 816 based on switching from the state 800 to the state 805. The electronic device 101 may move a position of the icon 517 in the visual object 121-1 to a position of the icon 517 of the visual object 121 based on switching from the state 800 to the state 805. The electronic device 101 may change the position of the icon 517 based on a direction 817. An operation in which the electronic device 101 changes the position of the icon 517 may move the icon 517 visually and naturally based on the direction 817, but is not limited thereto. The electronic device 101 may display the icon 815 based on another direction opposite to the direction 817. A position of an icon and/or a text object in the visual object 121 may be changed. As an example, the electronic device 101 may temporarily cease displaying the visual object 121-1 and display the visual object 121 in response to switching from the state 800 to the state 805.

Referring to FIG. 9, in operation 910, the electronic device 101 according to an embodiment may identify an input for an outgoing call related to an emergency service based on execution of a call software application. The operation 910 may be referred to the operation 410. A data signal 911 may be referred to the data signal 411 of FIG. 4.

For example, in a first state where the electronic device 101 establishes a communication link based on a WLAN, a specified time 914 may be referred to a first specified time (e.g., the first specified time 414 of FIG. 4) and a second specified time (e.g., the second specified time 417 of FIG. 4), a data signal 912 may be referred to the data signal 412 of FIG. 4, and a data signal 913 may be referred to the data signal 416 of FIG. 4.

For example, in a second state where the electronic device 101 does not establish the communication link based on the WLAN, the specified time 914 may be referred to a third specified time (e.g., the third specified time 614 of FIG. 6), the data signal 912 may be referred to the data signal 612 of FIG. 6, and the data signal 913 may be referred to the data signal 613 of FIG. 6.

For example, the electronic device 101 may obtain a data signal 915 based on identifying a failure of an outgoing connection. The electronic device 101 may switch from the state 800 of FIG. 8A to the state 805 of FIG. 8A in response to processing the data signal 915. In operation 916, the electronic device 101 may display a user interface (e.g., the user interface 120 of FIG. 8A) for transmitting a message to a satellite.

For example, while displaying the user interface, the electronic device 101 may transmit a data signal 917 to a first communication service and/or a second communication service in a background state. For example, the electronic device 101 may identify establishing an outgoing connection related to an emergency service based on transmitting the data signal 917 before receiving an input indicating establishing a communication link with the satellite using the user interface. The electronic device 101 may obtain a data signal 918 indicating establishing the outgoing connection based on identifying that the outgoing connection is established. Based on processing the data signal 918, in operation 919, the electronic device 101 may display a user interface (e.g., the user interface 803 of FIG. 8A) indicating the outgoing connection. The electronic device 101 may switch from the state 805 of FIG. 8A to the state 800 of FIG. 8A based on identifying that the outgoing connection is established based on at least one of a cellular network or a WLAN. However, it is not limited thereto.

According to an embodiment, the electronic device 101 may identify another user corresponding to the outgoing connection in order to perform satellite communication. A type of the other user may be classified based on a phone number corresponding to the outgoing connection. For example, in the state 805, the electronic device 101 may display a text object 810 on a display based on identifying an emergency telephone number 806 that does not charge for the satellite communication. For example, the visual object 121 may be an example of a user interface for providing a free satellite communication service.

For example, referring to FIG. 8B, in a state 807, according to an embodiment, the electronic device 101 may identify a phone number 820 distinguished from an emergency telephone number. In a case of transmitting a signal for requesting an outgoing call to another user corresponding to the phone number 820 to use an emergency service, the electronic device 101 may display a visual object 821 on the display by overlapping at least a portion of a visual object 121. The visual object 821 may include paid service functions provided to the electronic device 101 (or a user) using the emergency service. The visual object 821 may be an example of a user interface for providing a paid satellite communication service. The visual object 821 may include a plurality of icons 822. A first icon 822-1 may correspond to a function for requesting an outgoing connection to the other user (or another electronic device) corresponding to the phone number 820 distinguished from the emergency telephone number. A second icon 822-2 may correspond to a function for obtaining weather-related information. A third icon 822-3 may correspond to a function for obtaining information on a position of the electronic device 101. A fourth icon 822-4 may correspond to a function for transmitting a multimedia messaging service (MMS). In a case of performing the function for transmitting the multimedia messaging service, the electronic device 101 may transmit text, an image, and/or a video to the other user (or the other electronic device) corresponding to the phone number 820. For example, in a case that a function corresponding to each of the icons 822 is activated, a usage fee corresponding to the function may be charged. For example, a color of an activated icon and a color (e.g., gray) of a deactivated icon may be different. However, it is not limited to the above-described embodiment.

For example, the electronic device 101 may identify a service (e.g., a phone plan) related to satellite communication to which the user of the electronic device 101 subscribes. The electronic device 101 may switch from the state 800 to the state 807 based on the service related to the satellite communication. The electronic device 101 may display the visual object 821 on the display based on the service related to the satellite communication.

As described above, while displaying the user interface 120 for transmitting the message to the satellite on the display after identifying the failure of the outgoing connection based on the cellular network or the WLAN, the electronic device 101 according to an embodiment may maintain the request for the outgoing connection based on the cellular network or the WLAN in the background state. In a case that the outgoing connection is established based on maintaining the request for the outgoing connection based on the cellular network or the WLAN in the background state, the electronic device 101 may more quickly provide the emergency service to the user based on switching from the state 805 to the state 800.

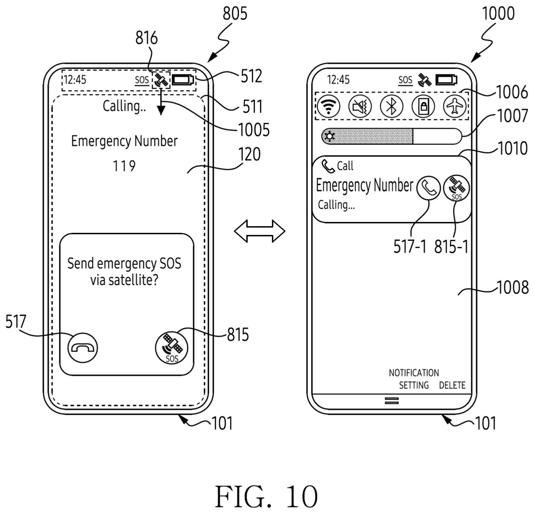

FIG. 10 illustrates an exemplary user interface displayed on a display by an electronic device after a specified time, according to an embodiment. An electronic device 101 of FIG. 10 may include the electronic device 101 of FIGS. 1 to 9. A state 805 may be referred to the state 805 of FIG. 8A.

Referring to FIG. 10, in the state 805, according to an embodiment, the electronic device 101 may identify a swipe input based on a direction 1005. The swipe input may be an example of a swipe input based on the direction 1005 from a point of a second partial area 512 to a point of a first partial area 511. The electronic device 101 may display a screen 1008 on the display in a state 1000 based on identifying the swipe input. The screen 1008 may be overlappingly displayed on a user interface 120.

For example, the screen 1008 may include one or more icons 1006. Each of the one or more icons 1006 may correspond to each of one or more functions that the electronic device 101 may perform. The one or more icons 1006 may include an icon for establishing a communication link based on a WLAN, an icon for establishing a communication link based on a cellular network, an icon for setting a sound of the electronic device 101, and/or an icon for deactivating a communication function (e.g., an airplane mode). The one or more icons 1006 may be referred to as a quick panel in terms of relatively quickly adjusting a state for one or more functions of the electronic device 101. The screen 1008 may include a visual object 1007 in a form of a slider for adjusting brightness of the display.

For example, in the state 1000, the electronic device 101 may overlappingly display a visual object 1010 corresponding to a visual object 121 on the screen 1008. At least a portion of the screen 1008 on which the visual object 1010 is displayed may be a portion used to indicate a notification message. The visual object 1010 may include an icon 517-1 corresponding to an icon 517. The visual object 1010 may include an icon 815-1 corresponding to an icon 815. Positions of the icon 517-1 and the icon 815-1 may be changed.

Hereinafter, an example of an operation in which the electronic device 101 displays a user interface for establishing a connection with a satellite in response to an input indicating selecting of the icon 815 or the icon 815-1 will be described with reference to FIG. 11.

FIG. 11 illustrates an example of an operation in which an electronic device displays a user interface related to a satellite, according to an embodiment. An electronic device 101 of FIG. 11 may include the electronic device 101 of FIGS. 1 to 10. A state 805 of FIG. 11 may be referred to the state 805 of FIG. 8A.

Referring to FIG. 11, in the state 805, according to an embodiment, the electronic device 101 may identify an input indicating selecting of an icon 815. The electronic device 101 may display a user interface 1105 on the display, in a state 1100, based on identifying the input. The user interface 1105 may be displayed based on execution of the emergency call application 242 of FIG. 2. For example, while displaying the user interface 1105, the electronic device 101 may maintain display of a visual object 816 displayed on a second partial area 512.

For example, the electronic device 101 may include a sensor (not illustrated). The sensor of the electronic device 101 may generate electronic information that may be processed by the processor 210 of FIG. 2 and/or the memory 215 of FIG. 2 of the electronic device 101 from non-electronic information related to the electronic device 101. The information may be referred to as sensor data. The sensor may include a global positioning system (GPS) sensor for detecting a geographic location of the electronic device 101, an image sensor, an illumination sensor, and/or a time-of-flight (ToF) sensor, and an inertial measurement unit (IMU) for detecting a physical motion of the electronic device 101. For example, using a sensor 230 including the IMU, the electronic device 101 may identify a direction of the electronic device 101.

For example, the IMU may include an acceleration sensor, a gyro sensor, a geomagnetic sensor, or a combination thereof. The acceleration sensor may output data indicating a direction and/or magnitude of gravitational acceleration applied to the acceleration sensor along a plurality of axes (e.g., x-axis, y-axis, and z-axis) perpendicular to each other. The gyro sensor may output data indicating rotation of each of the plurality of axes. The geomagnetic sensor may output data indicating a direction (e.g., a direction of an N pole or a S pole) of a magnetic field in which the geomagnetic sensor is included. The IMU in the sensor 230 may be referred to as a motion sensor in terms of detecting a motion of the electronic device 101. For example, the electronic device 101 may identify the direction of the electronic device 101 by controlling a sensor. The electronic device 101 may display, in the display, a visual object indicating a relative position of a satellite 110 with respect to the electronic device 101 based on identifying the direction.

For example, the electronic device 101 may identify a relative positional relationship between the electronic device 101 and a satellite (e.g., the satellite 110 of FIG. 1) using a sensor. For example, the electronic device 101 may establish a communication link with the satellite based on identifying an elevation angle with respect to the satellite and/or an azimuth with respect to the satellite. An operation in which the electronic device 101 identifies the relative position with respect to the satellite in order to establish the communication link with the satellite may be referred to as a pointing operation.

For example, the electronic device 101 may display the user interface 1105 on the display to initiate transmission of a message to the satellite 110 using the third communication circuit 235-3 of FIG. 2. The electronic device 101 may obtain an elevation angle of the electronic device with respect to the satellite and an azimuth of the electronic device with respect to the satellite using a sensor. The electronic device 101 may identify the elevation angle and the azimuth based on receiving information indicating a position of the satellite from the satellite. The electronic device 101 may identify the relative position of the satellite with respect to the electronic device 101 based on identifying the elevation angle and the azimuth. The electronic device 101 may initiate transmission of a signal for establishing the communication link with the satellite based on identifying that the relative position is within a specified area. For example, the electronic device 101 may identify the relative position between the satellite and the electronic device 101 using a position of the electronic device 101 and information indicating a specified orbit corresponding to the satellite. The information indicating the specified orbit of the satellite may be stored in the memory of the electronic device 101. The electronic device 101 may update the information based on a specified period (e.g., one day). The electronic device 101 may receive information indicating the position from the satellite in order to update the information. However, it is not limited to the above-described embodiment.

For example, the electronic device 101 may display a user interface (not illustrated) for obtaining a message to be transmitted to the satellite based on identifying the relative position of the satellite, using the user interface 1105. The electronic device 101 may establish the communication link with the satellite based on identifying the relative position of the satellite using the user interface 1105. The electronic device 101 may transmit a message indicating a state of the electronic device 101 (or a state of a user) to the satellite based on the established communication link.

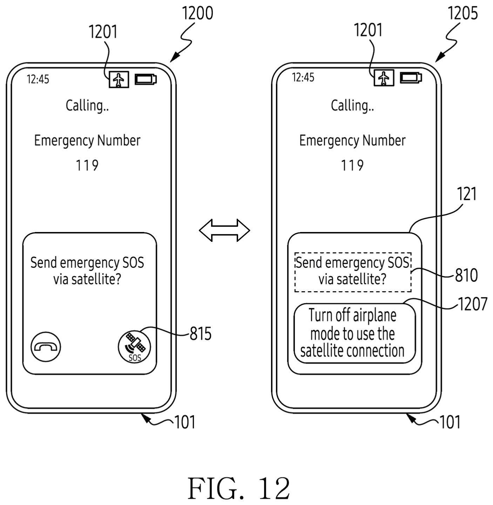

Hereinafter, an example of an operation for notifying a user of a restriction on a satellite connection in a state in which the electronic device 101 temporarily restricts a communication function (e.g., an airplane mode activation state) will be described later with reference to FIG. 12.

FIG. 12 illustrates an example of an operation in which an electronic device displays an exemplary visual object indicating a restriction on a satellite connection, according to an embodiment. An electronic device 101 of FIG. 12 may include the electronic device 101 of FIGS. 1 to 11. A state 1200 of FIG. 12 may be referred to the state 805 of FIG. 8A.

Referring to FIG. 12, in the state 1200 (e.g., an airplane mode activation state) where a communication function is at least temporarily restricted, the electronic device 101 according to an embodiment may display a visual object 121 on a first partial area 511 and a visual object 1201 indicating that the communication function is at least temporarily restricted on a second partial area 512. In the state 1200, the electronic device 101 may temporarily restrict a connection through communication circuitry (e.g., the communication circuitry 235 of FIG. 2). In the state 1200, the electronic device 101 may temporarily restrict a text message function, an outgoing call, and/or an incoming call.

For example, the electronic device 101 may identify an input for an icon 815 in the state 1200. The electronic device 101 may display a pop-up window 1207 on a display in a state 1205 based on identifying the input for the icon 815. The pop-up window 1207 may be displayed on the first partial area 511 by overlapping the user interface 120. However, it is not limited to the above-described example.

For example, the pop-up window 1207 may include a text object (e.g., Turn off airplane mode to use the satellite connection) indicating that a connection with a satellite is temporarily restricted. For example, the pop-up window 1207 may include various text objects according to a state of the electronic device 101. When the electronic device 101 establishes satellite communication in the state 1100 of FIG. 11, based on executing (e.g., executing an airplane mode) a function for entering the state 1200 for at least temporarily restricting the communication function, it may include a text object (e.g., Airplane mode cannot be used during a satellite connection) indicating that the function may not be executed. For example, in a case that an input for establishing a communication link based on a WLAN is identified in a state where the satellite communication is established, the pop-up window 1207 may include a text object (e.g., WiFi cannot be used during a satellite connection or, Bluetooth cannot be used during a satellite connection) indicating that the establishment of the communication link based on the WLAN is temporarily restricted in the state where the satellite communication is established. However, it is not limited thereto.

As described above, the electronic device 101 according to an embodiment may provide a notification indicating that execution of another function is temporarily restricted to a user according to a type of a function executed by the electronic device 101.

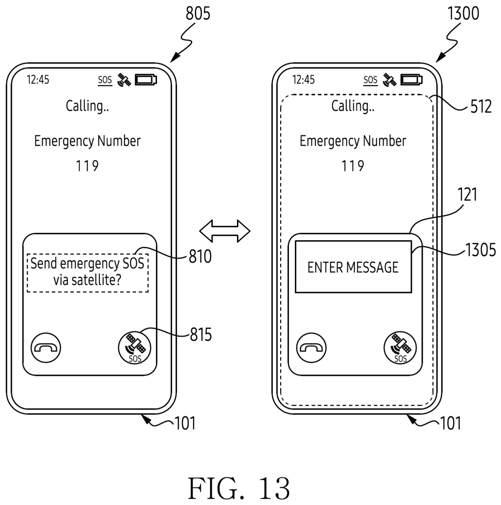

Hereinafter, an example of an operation in which the electronic device 101 displays a visual object for obtaining a message to be transmitted to a satellite will be described with reference to FIG. 13.

FIG. 13 illustrates an example of an operation in which an electronic device displays a visual object for obtaining a message to be transmitted to a satellite, according to an embodiment. An electronic device 101 of FIG. 13 may include the electronic device 101 of FIGS. 1 to 12. A state 805 of FIG. 13 may be referred to the state 805 of FIG. 8A.

Referring to FIG. 13, in a state 1300, the electronic device 101 according to an embodiment may display a visual object 1305 for obtaining a message to be transmitted to the satellite in a visual object 120 independently of displaying a text object 810.

For example, the electronic device 101 may display the visual object 120 including the visual object 1305 on a first partial area 511, and a visual object 816 indicating satellite communication on a second partial area 512. The electronic device 101 may identify an input indicating selecting of the visual object 1305. Based on identifying the input indicating selecting of the visual object 1305, the electronic device 101 may display a keyboard for obtaining an input for obtaining a message on a display. The electronic device 101 may display the keyboard by overlapping at least a portion of a user interface 120. The electronic device 101 may obtain the message to be transmitted to the satellite using the keyboard. The electronic device 101 may display a text object indicating the obtained message on the visual object 1305. The electronic device 101 may transmit the obtained message to the satellite based on identifying an input to an icon 815. The electronic device 101 may transmit the message to the satellite after performing a pointing operation through the user interface 1105 of FIG. 11 based on identifying the input to the icon 815. However, it is not limited to the above-described embodiment.

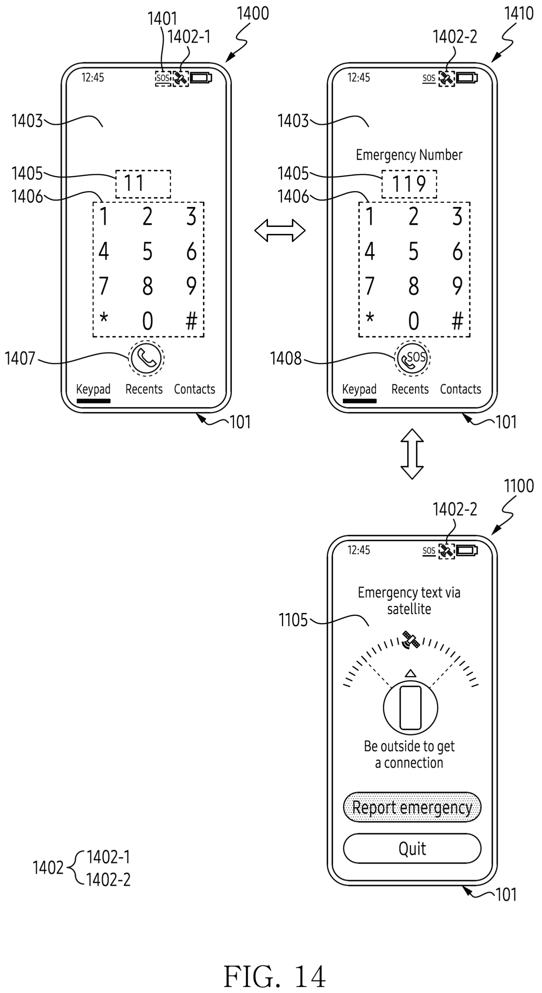

FIG. 14 illustrates an example of an operation in which an electronic device displays a visual object for establishing a connection with a satellite based on identifying a number related to an emergency service, according to an embodiment. An electronic device 101 of FIG. 14 may include the electronic device 101 of FIGS. 1 to 13.

Referring to FIG. 14, according to an embodiment, in a state 1400, the electronic device 101 may display, on a display, a user interface 1403 including an icon 1407 for requesting an outgoing call in order to receive an input for the outgoing call. The user interface 1403 may be displayed based on execution of the call software application 241 of FIG. 2. For example, the state 1400 may include an RRC idle state of the electronic device 101.

For example, in the state 1400, while displaying the user interface 1403, the electronic device 101 may display a visual object 1401 indicating an emergency call and a visual object 1402-1 indicating satellite communication on a second partial area 512. For example, the visual object 1402-1 indicating the satellite communication may mean indicating deactivation of the satellite communication.

For example, the user interface 1403 may include an icon 1407 for requesting an outgoing call, a number pad 1406 for obtaining an outgoing number, and/or a display area 1405 for displaying the outgoing number obtained using the number pad 1406. The electronic device 101 may identify an outgoing number corresponding to the emergency service using the user interface 1403. The electronic device 101 may identify the outgoing number obtained through the number pad 1406. In a case that the obtained outgoing number is the outgoing number corresponding to the emergency service, the electronic device 101 may switch from the state 1400 to a state 1410. In a case of identifying the outgoing number corresponding to the emergency service, the electronic device may display a text object (e.g., Emergency Number) indicating the outgoing number related to the emergency service. The outgoing number corresponding to the emergency service may include an emergency telephone number.

For example, the electronic device 101 may change the icon 1407 for requesting the outgoing call to an icon 1408 for transmitting a message to the satellite based on identifying the outgoing number corresponding to the emergency service. Based on switching from the state 1400 to the state 1410, the electronic device 101 may change the icon 1407 to the icon 1408 for transmitting the message to the satellite. The electronic device 101 may display, on the display, a visual object 1402 indicating that a connection with the satellite through third communication circuitry (e.g., the third communication circuitry 235-3 of FIG. 2) is available, independently of changing the icon 1407 to the icon 1408. The electronic device 101 may maintain display of the visual object 1402 independently of changing the icon 1407 to the icon 1408. As an example, the electronic device 101 may change from the visual object 1402-1 indicating that the connection with the satellite is deactivated to a visual object 1402-2 indicating that the connection with the satellite is available based on the electronic device 101 identifying the outgoing number corresponding to the emergency service. The electronic device 101 may change the visual object 1402-1 to the visual object 1402-2 based on changing a color of the visual object 1402-1.

For example, in the state 1410, the electronic device 101 may identify an input indicating selecting of the icon 1408. Based on receiving the input for the icon 1408, the electronic device 101 may display the user interface 1105 for establishing a communication connection with the satellite to transmit a message. In response to receiving the input, the electronic device 101 may switch from the state 1410 to a state 1100. The state 1100 may be referred to the state 1100 of FIG. 11. While displaying the user interface 1105, the electronic device 101 may maintain display of the visual object 1402.

As described above, according to an embodiment, the electronic device 101 may switch from the RRC idle state of the electronic device 101 to the state 1410 for establishing the connection with the satellite based on identifying the outgoing number corresponding to the emergency service. In the state 1410 for establishing the connection with the satellite, the electronic device 101 may display the visual object 1402-2 indicating that the connection with the satellite is available on the second partial area, and the icon 1408 for transmitting the message to the satellite on a first partial area. The electronic device 101 may more quickly provide the emergency service to a user by displaying the icon 1408 in response to identifying the outgoing number corresponding to the emergency service.

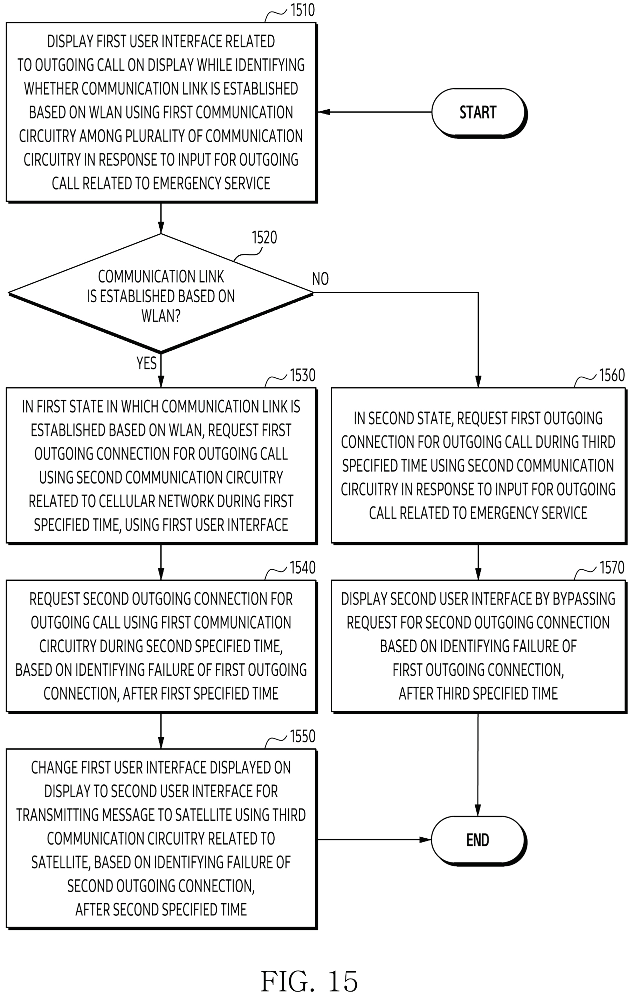

FIG. 15 is an exemplary flowchart indicating an operation of an electronic device according to an embodiment. The electronic device of FIG. 15 may include the electronic device 101 of FIGS. 1 to 14. At least one of operations of FIG. 15 may be performed by the electronic device 101 of FIG. 2 and/or the processor 210 of FIG. 2.

Referring to FIG. 15, in operation 1510, a processor according to an embodiment may display a first user interface (e.g., the user interface 803 of FIG. 8A) related to an outgoing call on a display while identifying whether a communication link is established based on a WLAN using first communication circuitry (e.g., the first communication circuitry 235-1 of FIG. 2) among a plurality of communication circuitry in response to an input for an outgoing call related to an emergency service. The input for the outgoing call related to the emergency service may be obtained based on execution of the call software application 241 of FIG. 2.

Referring to FIG. 15, in operation 1520, the processor according to an embodiment may identify whether the communication link is established based on the WLAN. For example, whether the communication link is established based on the WLAN may include whether an outgoing connection is available based on the WLAN. Whether the outgoing connection is available based on the WLAN may be identified according to whether an electronic device or a user of the electronic device is registered for a specified service (e.g., VoWiFi).

Referring to FIG. 15, in operation 1530, in a first state in which the communication link is established based on the WLAN (the operation 1520-YES), the processor according to an embodiment may request a first outgoing connection for the outgoing call using second communication circuitry (e.g., the second communication circuitry 235-2 of FIG. 2) related to a cellular network during a first specified time, using the first user interface. For example, while requesting the first outgoing connection, the processor may display, on the display, a visual object (e.g., the visual object 515 of FIG. 5) indicating that the first outgoing connection is requested, using the second communication circuitry.

Referring to FIG. 15, in operation 1540, the processor according to an embodiment may request a second outgoing connection for the outgoing call using the first communication circuitry during the second specified time, based on identifying a failure of the first outgoing connection, after the first specified time. For example, the processor may identify the failure of the first outgoing connection based on transmitting a data signal 413 to the second communication service 402 of FIG. 4 through the communication framework 251 of FIG. 2.

Referring to FIG. 15, in operation 1550, the processor according to an embodiment may change the first user interface displayed on the display to a second user interface (e.g., the user interface 120 of FIG. 1) for transmitting a message to a satellite using third communication circuitry related to the satellite, based on identifying a failure of the second outgoing connection, after the second specified time. The second user interface may include a visual object (e.g., the visual object 816 of FIG. 8A) indicating use of the third communication circuitry. The second user interface may include a visual object (e.g., the icon 815 of FIG. 8A) for establishing a communication connection with the satellite to transmit the message to the satellite. As an example, the second user interface may include a text object (e.g., the text object 815 of FIG. 8A) and/or a visual object (e.g., the visual object 1305 of FIG. 13) for obtaining the message to be transmitted to the satellite.

Referring to FIG. 15, in operation 1560, in a second state (the operation 1520-NO), the processor according to an embodiment may request the first outgoing connection for the outgoing call during a third specified time using the second communication circuitry in response to the input for the outgoing call related to the emergency service. The third specified time may include the first specified time and the second specified time.

Referring to FIG. 15, in operation 1570, the processor according to an embodiment may display the second user interface by bypassing a request for the second outgoing connection based on identifying the failure of the first outgoing connection, after the third specified time. For example, in the second state, the processor may perform the outgoing connection based on the cellular network for a relatively longer time than the first state.

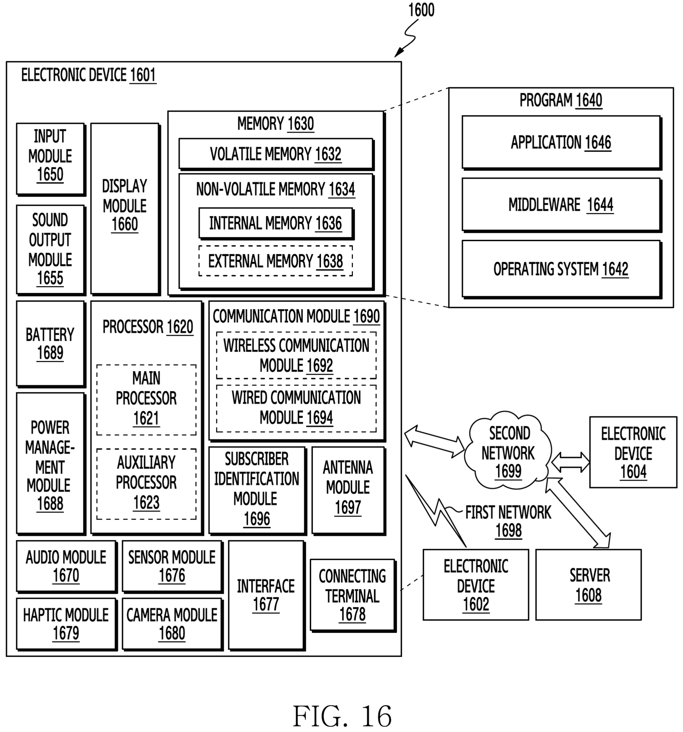

FIG. 16 is a block diagram illustrating an electronic device 1601 in a network environment 1600 according to various embodiments. Referring to FIG. 16, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module(SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to an embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thereto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, an HDMI connector, a USB connector, an SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to an embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 1664dB or less) for implementing mMTC, or U-plane latency (e.g., 0.5ms or less for each of downlink (DL) and uplink (UL), or a round trip of 16ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The electronic device 1601 of FIG. 16 may be referred to the electronic device 101 of FIGS. 1 to 15.

An electronic device according to an embodiment may establish a connection for an outgoing call related to an emergency service using a plurality of communication circuitry. A method for establishing satellite communication by the electronic device through communication circuitry related to a satellite among the plurality of communication circuitry may be required.

As described above, in an electronic device 101 according to an embodiment, the electronic device may include a display 220, a plurality of communication circuitry 235, and a processor 210. The processor may be configured to, while identifying whether a communication link is established based on a wireless local area network (WLAN) using first communication circuitry 235-1 of the plurality of communication circuitry in response to an input for an outgoing call related to an emergency service, display, on the display, a first user interface 803 related to the outgoing call. The processor may be configured to, in a first state where the communication link is established based on the WLAN, using the first user interface, during a first specified time 414 or 510, request a first outgoing connect for the outgoing call using second communication circuitry 235-2 related to a cellular network. The processor may be configured to, after the first specified time, based on identifying a failure of the first outgoing connection, request a second outgoing connection for the outgoing call using the first communication circuitry during a second specified time 417 or 520. The processor may be configured to, after the second specified time, based on identifying a failure of the second outgoing connection, change the first user interface displayed on the display to a second user interface 120 for transmitting a message to a satellite 100 using third communication circuitry 235-3 related to the satellite. The processor may be configured to, in a second state distinct from the first state, in response to the input, request the first outgoing connection for the outgoing call using the second communication circuitry during a third specified time 500 or 614. The processor may be configured to, after the third specified time, based on identifying a failure of the first outgoing connection, display the second user interface by bypassing a request for the second outgoing connection.

For example, the third specified time may include the first specified time and the second specified time.

For example, the second user interface may include a first visual object 816 or 1402 indicating the third communication circuitry being used. The second user interface may include a second visual object 815 for establishing a communication link with the satellite using the third communication circuitry to transmit the message to the satellite.

For example, the second user interface may include a third visual object 1305 for obtaining the message to be transmitted to the satellite.

For example, the second user interface may include a text object 810 indicating whether to transmit the message to the satellite.

For example, the processor may display, on the display, a third user interface 1403 including a fourth visual object 1407 for requesting the outgoing call, to receive the input for the outgoing call. The processor may identify an outgoing number corresponding to the emergency service using the third user interface. The processor may be configured to, based on identifying the outgoing number corresponding to the emergency service, change the fourth visual object for requesting the outgoing call to a fifth visual object 1408 for transmitting the message.

For example, the processor may be configured to display, on the display, a first visual object 816 or 1402 indicating the third communication circuitry being used, based on identifying the outgoing number, independently of changing the fourth visual object to the fifth visual object.

For example, the processor may be configured to, based on receiving an input for the fifth visual object, display, on the display, a fourth user interface 1105 for establishing a communication link with the satellite for transmitting the message. The processor may be configured to maintain the display of the first visual object.

As described above, in a method performed by an electronic device according to an embodiment, the method may include, while identifying whether a communication link is established based on a wireless local area network (WLAN) using first communication circuitry 235-1 of a plurality of communication circuitry 235 in response to an input for an outgoing call related to an emergency service, displaying, on a display, a first user interface 803 related to the outgoing call. The method may include, in a first state where the communication link is established based on the WLAN, using the first user interface, during a first specified time 414 or 510, requesting a first outgoing connect for the outgoing call using second communication circuitry 235-2 related to a cellular network. The method may include, after the first specified time, based on identifying a failure of the first outgoing connection, requesting a second outgoing connection for the outgoing call using the first communication circuitry during a second specified time 417 or 520. The method may include, after the second specified time, based on identifying a failure of the second outgoing connection, changing the first user interface displayed on the display to a second user interface 120 for transmitting a message to a satellite 100 using third communication circuitry 235-3 related to the satellite. The method may include, in a second state distinct from the first state, in response to the input, requesting the first outgoing connection for the outgoing call using the second communication circuitry during a third specified time 500 or 614. The method may include, after the third specified time, based on identifying a failure of the first outgoing connection, displaying the second user interface by bypassing a request for the second outgoing connection.

For example, in the method, the third specified time may include the first specified time and the second specified time.

For example, the second user interface may include a first visual object 816 or 1402 indicating the third communication circuitry being used. The second user interface may include a second visual object for establishing a communication link with the satellite using the third communication circuitry to transmit the message to the satellite.

For example, the second user interface may include a third visual object 1305 for obtaining the message to be transmitted to the satellite.

For example, the second user interface may include a text object 810 indicating whether to transmit the message to the satellite.

For example, the method may include, displaying, on the display, a third user interface 1403 including a fourth visual object 1407 for requesting the outgoing call, to receive the input for the outgoing call. The method may include identifying an outgoing number corresponding to the emergency service using the third user interface. The method may include, based on identifying the outgoing number corresponding to the emergency service, changing the fourth visual object for requesting the outgoing call to a fifth visual object 1408 for transmitting the message.

For example, the method may include displaying, on the display, a first visual object 816 or 1402 indicating the third communication circuitry being used, based on identifying the outgoing number, independently of changing the fourth visual object to the fifth visual object.

As described above, in an electronic device 101 according to an embodiment, the electronic device may include a display 220, a plurality of communication circuitry 235, and a processor 210. The processor may be configured to, while displaying, on the display, a first user interface 803 related to an outgoing call in response to an input for the outgoing call related to an emergency service, identify whether a communication link is established based on a wireless local area network (WLAN) using first communication circuitry 235-1 of the plurality of communication circuitry. The processor may be configured to, in a first state where the communication link is established based on the WLAN, request a first outgoing connect for the outgoing call using second communication circuitry 235-2 related to a cellular network. The processor may be configured to, during a first specified time 414 or 510 requesting the first outgoing connection, display, on the display, a first visual object 502 indicating the first outgoing connection being requested, using the second communication circuitry. The processor may be configured to, after the first specified time, based on identifying a failure of the first outgoing connection, request a second outgoing connection for the outgoing call using the first communication circuitry. The processor may be configured to, during a second specified time 417 or 520 requesting the second outgoing connection, display, on the display, a second visual object 525 indicating the second outgoing connection being requested, by replacing the first visual object. The processor may be configured to, after the second specified time, based on identifying a failure of the second outgoing connection, display a second user interface 120 for transmitting a message to a satellite 110 using third communication circuitry 235-3 related to the satellite by replacing the first user interface displayed on the display.

For example, the processor may, in a second state distinct from the first state, in response to the input, display the first visual object in the first user interface during a third specified time 500 or 614 requesting the first outgoing connection for the outgoing call using the second communication circuitry. The processor may be configured to, after the third specified time, based on identifying a failure of the first outgoing connection, display the second user interface by bypassing a request for the second outgoing connection.

For example, the second user interface may include a third visual object 816 or 1402 indicating the third communication circuitry being used. The second user interface may include a fourth visual object 815 for establishing a communication link with the satellite using the third communication circuitry to transmit the message to the satellite.

For example, the second user interface may include a fifth visual object 1305 for obtaining the message to be transmitted to the satellite.

For example, the second user interface may include a text object 810 indicating whether to transmit the message to the satellite.

As described above, in a method performed by an electronic device 101 according to an embodiment, the method may include, while displaying, on a display 220, a first user interface 803 related to an outgoing call in response to an input for the outgoing call related to an emergency service, identifying whether a communication link is established based on a wireless local area network (WLAN) using first communication circuitry 235-1 of a plurality of communication circuitry 235. The method may include, in a first state where the communication link is established based on the WLAN, requesting a first outgoing connect for the outgoing call using second communication circuitry 235-2 related to a cellular network. The method may include, during a first specified time 414 or 510 requesting the first outgoing connection, displaying, on the display, a first visual object 502 indicating the first outgoing connection being requested, using the second communication circuitry. The method may include, after the first specified time, based on identifying a failure of the first outgoing connection, requesting a second outgoing connection for the outgoing call using the first communication circuitry. The method may include, during a second specified time 417 or 520 requesting the second outgoing connection, displaying, on the display, a second visual object 525 indicating the second outgoing connection being requested, by replacing the first visual object. The method may include, after the second specified time, based on identifying a failure of the second outgoing connection, displaying a second user interface 120 for transmitting a message to a satellite 110 using third communication circuitry 235-3 related to the satellite by replacing the first user interface displayed on the display.

As described above, in a computer readable storage medium according to an embodiment including one or more programs, the one or more programs may be configured to include instructions to, when executed by a processor 120 of an electronic device 101, cause the electronic device to, while identifying whether a communication link is established based on a wireless local area network (WLAN) using first communication circuitry 235-1 of a plurality of communication circuitry 235 in response to an input for an outgoing call related to an emergency service, display, on a display 220, a first user interface 803 related to the outgoing call. The one or more programs may be configured to include the instructions to, when executed by the processor of the electronic device, cause the electronic device to, in a first state where the communication link is established based on the WLAN, using the first user interface, during a first specified time 414 or 510, request a first outgoing connect for the outgoing call using second communication circuitry 235-2 related to a cellular network. The one or more programs may be configured to include the instructions to, when executed by the processor of the electronic device, cause the electronic device to, after the first specified time, based on identifying a failure of the first outgoing connection, request a second outgoing connection for the outgoing call using the first communication circuitry during a second specified time 417 or 520. The one or more programs may be configured to include the instructions to, when executed by the processor of the electronic device, cause the electronic device to, after the second specified time, based on identifying a failure of the second outgoing connection, change the first user interface displayed on the display to a second user interface 120 for transmitting a message to a satellite 110 using third communication circuitry 235-3 related to the satellite. The one or more programs may be configured to include the instructions to, when executed by the processor of the electronic device, cause the electronic device to, in a second state distinct from the first state, in response to the input, request the first outgoing connection for the outgoing call using the second communication circuitry during a third specified time 500 or 614. The one or more programs may be configured to include the instructions to, when executed by the processor of the electronic device, cause the electronic device to, after the third specified time, based on identifying a failure of the first outgoing connection, display the second user interface by bypassing a request for the second outgoing connection.

As described above, in a computer readable storage medium according to an embodiment including one or more programs, the one or more programs may be configured to include instructions to, when executed by a processor 120 of an electronic device 101, cause the electronic device to, while displaying, on a display 220, a first user interface 803 related to an outgoing call in response to an input for the outgoing call related to an emergency service, identify whether a communication link is established based on a wireless local area network (WLAN) using first communication circuitry 235-1 of a plurality of communication circuitry 235. The one or more programs may be configured to include the instructions to, when executed by the processor of the electronic device, cause the electronic device to, in a first state where the communication link is established based on the WLAN, request a first outgoing connect for the outgoing call using second communication circuitry 235-2 related to a cellular network. The one or more programs may be configured to include the instructions to, when executed by the processor of the electronic device, cause the electronic device to, during a first specified time 414 or 510 requesting the first outgoing connection, display, on the display, a first visual object 502 indicating the first outgoing connection being requested, using the second communication circuitry. The one or more programs may be configured to include the instructions to, when executed by the processor of the electronic device, cause the electronic device to, after the first specified time, based on identifying a failure of the first outgoing connection, request a second outgoing connection for the outgoing call using the first communication circuitry. The one or more programs may be configured to include the instructions to, when executed by the processor of the electronic device, cause the electronic device to, during a second specified time 417 or 520 requesting the second outgoing connection, display, on the display, a second visual object 525 indicating the second outgoing connection being requested, by replacing the first visual object. The one or more programs may be configured to include the instructions to, when executed by the processor of the electronic device, cause the electronic device to, after the second specified time, based on identifying a failure of the second outgoing connection, display a second user interface 120 for transmitting a message to a satellite 110 using third communication circuitry 235-3 related to the satellite by replacing the first user interface displayed on the display.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
a display (220);
a plurality of communication circuitry (235);
at least one processor (210) comprising processing circuitry; and
memory (215) comprising one or more storage mediums storing instructions, wherein the instructions, when executed by the at least one processor (210) individually or collectively, cause the electronic device (101) to:
while identifying whether a communication link is established based on a wireless local area network (WLAN) using first communication circuitry (235-1) of the plurality of communication circuitry in response to an input for an outgoing call related to an emergency service, display, on the display, a first user interface (803) related to the outgoing call;
in a first state where the communication link is established based on the WLAN, using the first user interface, during a first specified time (414; 510), request a first outgoing connect for the outgoing call using second communication circuitry (235-2) related to a cellular network;
after the first specified time, based on identifying a failure of the first outgoing connection, request a second outgoing connection for the outgoing call using the first communication circuitry during a second specified time (417; 520);
after the second specified time, based on identifying a failure of the second outgoing connection, change the first user interface displayed on the display to a second user interface (120) for transmitting a message to a satellite using third communication circuitry (235-3) related to the satellite (110);
in a second state distinct from the first state, in response to the input, request the first outgoing connection for the outgoing call using the second communication circuitry during a third specified time (500; 614); and
after the third specified time, based on identifying a failure of the first outgoing connection, display the second user interface by bypassing a request for the second outgoing connection.

2. The electronic device of claim 1,
wherein the third specified time includes the first specified time and the second specified time.

3. The electronic device of any one of claims 1 to 2, wherein the second user interface includes:
a first visual object (816; 1402) indicating the third communication circuitry being used, and
a second visual object (815) for establishing a communication link with the satellite using the third communication circuitry to transmit the message to the satellite.

4. The electronic device of any one of claims 1 to 3,
wherein the second user interface includes a third visual object (1305) for obtaining the message to be transmitted to the satellite.

5. The electronic device of any one of claims 1 to 4, wherein the second user interface includes a text object (810) indicating whether to transmit the message to the satellite.

6. The electronic device of any one of claims 1 to 5, wherein the instructions, when executed by the at least one processor (210) individually or collectively, cause the electronic device (101) to:
to receive the input for the outgoing call, display, on the display, a third user interface (1403) including a fourth visual object (1407) for requesting the outgoing call,
identify an outgoing number corresponding to the emergency service using the third user interface, and
based on identifying the outgoing number corresponding to the emergency service, change the fourth visual object for requesting the outgoing call to a fifth visual object (1408) for transmitting the message.

7. The electronic device of any one of claims 1 to 6, wherein the instructions, when executed by the at least one processor (210) individually or collectively, cause the electronic device (101) to:
display, on the display, a first visual object (816; 1402) indicating the third communication circuitry being used, based on identifying the outgoing number, independently of changing the fourth visual object to the fifth visual object.

8. The electronic device of any one of claims 1 to 7, wherein the instructions, when executed by the at least one processor (210) individually or collectively, cause the electronic device (101) to:
based on receiving an input for the fifth visual object, display, on the display, a fourth user interface (1105) for establishing a communication link with the satellite for transmitting the message, and
maintain the display of the first visual object.

9. A method performed by an electronic device, the method comprising:
while identifying whether a communication link is established based on a wireless local area network (WLAN) using first communication circuitry (235-1) of a plurality of communication circuitry (235) in response to an input for an outgoing call related to an emergency service, displaying, on a display, a first user interface (803) related to the outgoing call;
in a first state where the communication link is established based on the WLAN, using the first user interface, during a first specified time (414; 510), requesting a first outgoing connect for the outgoing call using second communication circuitry (235-2) related to a cellular network;
after the first specified time, based on identifying a failure of the first outgoing connection, requesting a second outgoing connection for the outgoing call using the first communication circuitry during a second specified time (417; 520);
after the second specified time, based on identifying a failure of the second outgoing connection, changing the first user interface displayed on the display to a second user interface (120) for transmitting a message to a satellite using third communication circuitry (235-3) related to the satellite (110);
in a second state distinct from the first state, in response to the input, requesting the first outgoing connection for the outgoing call using the second communication circuitry during a third specified time (500; 614); and
after the third specified time, based on identifying a failure of the first outgoing connection, displaying the second user interface by bypassing a request for the second outgoing connection.

10. The method of claim 9,
wherein the third specified time includes the first specified time and the second specified time.

11. The method of any one of claims 9 to 10, wherein the second user interface includes:
a first visual object (816; 1402) indicating the third communication circuitry being used, and
a second visual object for establishing a communication link with the satellite using the third communication circuitry to transmit the message to the satellite.

12. The method of any one of claims 9 to 11, wherein the second user interface includes a third visual object (1305) for obtaining the message to be transmitted to the satellite.

13. The method of any one of claims 9 to 12, wherein the second user interface includes a text object (810) indicating whether to transmit the message to the satellite.

14. The method of any one of claims 9 to 13, comprising:
to receive the input for the outgoing call, displaying, on the display, a third user interface (1403) including a fourth visual object (1407) for requesting the outgoing call,
identifying an outgoing number corresponding to the emergency service using the third user interface, and
based on identifying the outgoing number corresponding to the emergency service, changing the fourth visual object for requesting the outgoing call to a fifth visual object (1408) for transmitting the message.

15. The method of any one of claims 9 to 14, comprising:
displaying, on the display, a first visual object (816; 1402) indicating the third communication circuitry being used, based on identifying the outgoing number, independently of changing the fourth visual object to the fifth visual object.
